# EUROPÄISCHE PATENTANMELDUNG

(11) **EP 4 671 535 A1**
(43) Veröffentlichungstag der Anmeldung: **31.12.2025**
(21) Anmeldenummer: 24184857.1
(22) Anmeldetag: 27.06.2024
(51) Int. Cl.: F03D 13/30, F03D 17/00

(54) **VERFAHREN ZUM VALIDIEREN EINER WINDENERGIEANLAGE**

(71) Anmelder: Wobben Properties GmbH, 26607 Aurich (DE)
(72) Erfinder: WEBER, Marcel, 26607 Aurich (DE); GIESLER, Matthias, 26603 Aurich (DE)
(74) Vertreter: Eisenführ Speiser

(57) **Zusammenfassung**

Die Erfindung betrifft ein Verfahren zum Validieren einer Windenergieanlage oder einer Komponente der Windenergieanlage, wobei die Windenergieanlage einen aerodynamischen Rotor mit mehreren, eine Rotorfläche überstreichenden Rotorblättern aufweist, wobei jedes Rotorblatt eine Blattwurzel mit einem Blattwurzelbereich aufweist und in seinem Blattwinkel verstellbar ist; und für wenigstens eines der Rotorblätter jeweils aus erfassten Betriebsdaten der Windenergieanlage ein individuelles Blattleistungsvermögen, und/oder eine individuelle Blattleistung ermittelt wird, wobei das individuelle Blattleistungsvermögen ein Vermögen eines Rotorblattes beschreibt, Leistung aus Wind in eine Teildrehleistung zum Drehen des Rotors umzuwandeln, und die individuelle Blattleistung eine Leistung der Höhe nach bezeichnet, die das jeweilige Rotorblatt aus dem Wind in eine Teildrehleistung zum Drehen des Rotors umwandelt, sodass eine Summe der individuellen Blattleistungen aller Rotorblätter des Rotors eine gesamte Drehleistung des Rotors ergibt.

## Beschreibung

Die vorliegende Erfindung betrifft ein Verfahren zum Validieren einer Windenergieanlage oder einer Komponente der Windenergieanlage. Außerdem betrifft die vorliegende Erfindung eine entsprechende Windenergieanlage.

Windenergieanlagen sind bekannt, sie erzeugen mithilfe eines Rotors mit insbesondere drei Rotorblättern an dem Rotor elektrische Leistung aus Wind. Es ist eine häufige Aufgabe, solche Windenergieanlagen in ihrer Leistungsfähigkeit zu verbessern und darunter fällt auch, die Rotorblätter zu verbessern, nämlich insbesondere aerodynamisch zu verbessern.

Für Rotorblätter gibt es unterschiedliche Arten von Ergänzungen, die auch als "Add-Ons" bezeichnet werden können, die die Strömungszustände am Rotorblatt verbessern sollen. Dazu gehören Vortex-Generatoren, Trailing-Edge-Serrations und Gurny Flaps, um nur einige zu nennen. Messungen aus einem Windkanal und Ergebnisse aus Simulationen versprechen für das Ergänzen solcher Add-Ons oder andere Maßnahmen oftmals eine Verbesserung der Leistungskurve. Die Gewinne in der Leistungsfähigkeit können im Bereich von 0,2 bis 0,5 Prozent der jährlichen Energieproduktion liegen. Solche Größenordnungen können in einer Leistungskurvenvermessung jedoch oftmals nicht validiert werden, da saisonale Schwankungen in der Leistungskurve sich auf ein bis zwei Prozent der jährlichen Energieproduktion belaufen können. Die genannten saisonalen Schwankungen fallen besonders dann ins Gewicht, wenn in einem ersten Zeitraum von bspw. zwei bis drei Monaten ohne "Add-Ons" am Rotorblatt und in einem zweiten Zeitraum mit "Add-Ons" am Rotorblatt die Leistungskurve bestimmt wird. Der jeweilige aus den Leistungskurven gebildete resultierende Wert der jährlichen Energieproduktion ist dann zu stark von den saisonalen Schwankungen der Leistungskurve beeinflusst, so dass die Auswirkungen der "Add-Ons" auf den Wert der jährlichen Energieproduktion nur schwer beziffert werden können.

Es ist somit schwierig, die Ergebnisse aus dem Windkanal und der Simulation zu validieren. Eine solche Validierung ist aber hilfreich, um die "Add-Ons" zu bewerten und zu entscheiden, ob sie ergänzt werden sollen oder nicht. All diese Überlegungen zu den "Add-Ons" betreffen auch andere Änderungen des Rotorblattes, einschließlich ein neu entwickeltes, also anderes Rotorblatt. Jedes "Add-On" kann zu einer Preissteigerung des Rotorblatts führen und gegebenenfalls einen Wartungsaufwand erhöhen. Daher wäre eine Validierung hilfreich, um weitere Indikationen zur Wirkweise, Wirksamkeit und/oder erreichbaren Verbesserung der "Rotorblatt Add-Ons" zu bekommen.

Bisher konnten Auswirkungen von Add-Ons auf die Leistungskurve dadurch validiert werdpen, dass zunächst eine Leistungskurve an einer Windenergieanlage vermessen wurde, was etwa zwei bis drei Monate dauern kann. Daraufhin wurden dann die "Add-Ons" am Rotorblatt installiert und es wurde erneut die Leistungskurve vermessen. Aufgrund der saisonalen Unterschiede in der Leistungskurve konnten jedoch nur sehr schwer Schlüsse aus der so ermittelten Performance der "Add-Ons" gezogen werden.

Der Erfindung liegt somit die Aufgabe zugrunde, zumindest eines der oben genannten Probleme zu adressieren, insbesondere soll eine Lösung vorgeschlagen werden, bei der Auswirkungen von Veränderungen am Rotorblatt auf die Leistungsfähigkeit der Windenergieanlage mit hoher Genauigkeit erfasst werden können, um dadurch diese Auswirkungen zu validieren. Zumindest soll zu bisher bekannten Lösungen eine Alternative vorgeschlagen werden.

Erfindungsgemäß wird ein Verfahren gemäß Anspruch 1 vorgeschlagen. Demnach wird eine Windenergieanlage oder eine Komponente der Windenergieanlage validiert bzw. bewertet. Dieses Validieren bzw. Bewerten betrifft das Validieren von Auswirkungen einzelner Elemente der Windenergieanlage, besonders auf ihre Leistungsfähigkeit. Insbesondere werden Rotorblätter bzw. Veränderungen der Rotorblätter validiert bzw. die Auswirkungen solcher Veränderungen, besonders auf die Leistungsfähigkeit der Rotorblätter, validiert.

Damit wird auch die Windenergieanlage insgesamt validiert, denn die Leistungsfähigkeit der Rotorblätter wirkt sich unmittelbar auf die Leistungsfähigkeit der Windenergieanlage insgesamt aus.

Eine solche Windenergieanlage weist also einen aerodynamischen Rotor mit mehreren, eine Rotorfläche überstreichenden Rotorblättern auf. Insbesondere sind drei Rotorblätter vorgesehen. Jedes Rotorblatt weist eine Blattwurzel mit einem Blattwurzelbereich auf, und jedes Rotorblatt ist in seinem Blattwinkel verstellbar. Insoweit werden im Grunde übliche Rotorblätter eingesetzt bzw. das Verfahren betrifft eine übliche, pitchgeregelte Windenergieanlage.

Es ist dann vorgesehen, dass für wenigstens eines der Rotorblätter jeweils aus erfassten Betriebsdaten der Windenergieanlage ein individuelles Blattleistungsvermögen, und/oder eine individuelle Blattleistung ermittelt wird. Das individuelle Blattleistungsvermögen beschreibt ein Vermögen eines Rotorblattes, Leistung aus Wind in eine Teildrehleistung zum Drehen des Rotors umzuwandeln. Die individuelle Blattleistung bezeichnet eine Leistung der Höhe nach, die das jeweilige Rotorblatt aus dem Wind in eine Teildrehleistung zum Drehen des Rotors umwandelt, so dass eine Summe der individuellen Blattleistungen aller Rotorblätter des Rotors eine gesamte Drehleistung des Rotors ergibt.

Die gesamte Drehleistung des Rotors ist also die Leistung, die der Rotor aus dem Wind entnehmen kann. Im symmetrischen und gleichmäßigen Fall und bei einem Rotor mit drei Rotorblättern ist also die individuelle Blattleistung ein Drittel der gesamten Drehleistung des Rotors.

Es wurde aber erkannt, dass eine solche Symmetrie nicht unbedingt vorliegen muss, und es wurde besonders erkannt, dass es Möglichkeiten gibt, die individuelle Blattleistung jedes einzelnen Rotorblatts zu bestimmen, also in einer Art und Weise, dass die individuelle Blattleistung nicht einfach nur ein Drittel der Drehleistung des Rotors ist. Das eröffnet die Möglichkeit, die Windenergieanlage zeitgleich mit unterschiedlichen Rotorblättern zu betreiben, und individuelle Blattleistungsvermögen, insbesondere individuelle Blattleistungen, zu erfassen und gegenüberzustellen. Möglichkeiten der Erfassung der individuellen Blattleistung werden nachfolgend noch ausführlich beschrieben.

Jedenfalls wurde auch erkannt, dass das Ermitteln der individuellen Blattleistung dazu genutzt werden kann, die Leistungsfähigkeit eines einzelnen Rotorblatts zu bewerten und das eröffnet die Möglichkeit, die Leistungsfähigkeit einzelner Rotorblätter eines Rotors einer Windenergieanlage zu ermitteln, wenn die Rotorblätter des Rotors der Windenergieanlage nicht gleich sind. In dem Fall kann eine individuelle Blattbewertung vorgenommen werden.

Zum Ermitteln der individuellen Blattleistung werden erfasste Betriebsdaten der Windenergieanlage verwendet und das kann neben einem Leistungsverlauf der Windenergieanlage, der auch zeitliche Schwankungen mit der Drehung des Rotors wiedergeben kann, das Erfassen von Blattlasten beinhalten. Auch andere Sensoren können am jeweiligen Blatt oder an der Nabe im Bereich der jeweiligen Blattwurzel des jeweiligen Rotorblatts angeordnet und zum Ermitteln der individuellen Blattleistung eingesetzt werden.

Es wird gemäß einem Aspekt auch das Folgende vorgeschlagen:
Ein Verfahren zum Validieren oder Bewerten einer Windenergieanlage, wobei die Windenergieanlage einen aerodynamischen Rotor mit mehreren, eine Rotorfläche überstreichenden Rotorblättern aufweist, wobei
- jedes Rotorblatt eine Blattwurzel mit einem Blattwurzelbereich aufweist und in seinem Blattwinkel verstellbar ist; und
- für wenigstens eines der Rotorblätter jeweils aus erfassten Betriebsdaten der Windenergieanlage eine individuelle Blatteigenschaft ermittelt wird, wobei
- die individuelle Blatteigenschaft eine individuelle Blattleistung, oder eine die individuelle Blattleistung beeinflussende andere Eigenschaft des Rotorblattes bezeichnet, oder eine von der individuellen Blattleistung unabhängige Eigenschaft des Rotorblattes bezeichnet.

Jegliche Verfahren und Aspekte, die nachfolgend im Zusammenhang mit der individuellen Blattleistung beschrieben werden, insbesondere zur Ermittlung der individuellen Blattleistung, sind auch auf die individuelle Blatteigenschaft entsprechend anwendbar und entsprechende Beschreibungen sind auch als Beschreibungen für individuelle Blatteigenschaften zu verstehen, die selbst keine individuelle Blattleistung betreffen müssen, auch wenn dies nachfolgend jeweils nicht ausdrücklich auf die individuelle Blatteigenschaft bezogen wird.

Gemäß einem Aspekt wird vorgeschlagen, dass die individuelle Blattleistung in Abhängigkeit von einer Lastauswertung des jeweiligen Rotorblattes ermittelt wird. Hier wurde besonders erkannt, dass eine Leistungserfassung oder Auswertung des Generators oder zumindest basierend auf Leistungswerten des Generators, nur schwierig eine quantitative Aussage über eine individuelle Blattleistung ermöglicht, dass aber die Berücksichtigung einer Lastauswertung des jeweiligen Rotorblattes eine solche Qualifizierung ermöglicht. Die Lastauswertung kann dabei ergänzend berücksichtigt werden, bspw. ergänzend zu einer Gesamtleistungserfassung und/oder einer Drehzahl des Rotors.

Durch die Berücksichtigung der Lastauswertung des jeweiligen Rotorblattes ist somit die individuelle Blattleistung ermittelbar.

Gemäß einem Aspekt wird vorgeschlagen, dass die individuelle Blattleistung in Abhängigkeit von einer erfassten Blattlast, insbesondere einer erfassten Schwenklast des jeweiligen Rotorblattes ermittelt wird, insbesondere an der Blattwurzel oder im Blattwurzelbereich des jeweiligen Rotorblattes.

Besonders können entsprechende Lastsensoren zur Erfassung von Schwenk- und Schlaglasten vorhanden sein. Die Schwenklast bezeichnet eine Last, mit anderen Worten also ein Biegemoment, auf das Rotorblatt in Drehrichtung des Rotors, wohingegen eine Schlaglast eine Last quer dazu bezeichnet. Die Schwenklast ist somit das wesentliche Drehmoment an dem Rotorblatt, das zur Drehung des Rotors und damit Leistungserzeugung bzw. Umwandlung mittels des Rotorblattes führt.

Allerdings sind entsprechende Messsensoren häufig am Rotorblatt an oder in der Nähe der Blattwurzel angeordnet und werden somit beim Verdrehen des Rotorblattes ebenfalls mit verdreht. Insoweit ist eine von einem entsprechenden Sensor erfasste Last nicht unbedingt exakt in Schwenkrichtung gerichtet, je nach eingestelltem Blattwinkel des jeweiligen Rotorblattes. Grundsätzlich ist eine Umrechnung auf eine Schwenklast in Abhängigkeit von dem eingestellten Blattwinkel möglich und die wird hier gemäß dem vorliegenden Aspekt auch vorgeschlagen. Es ist aber zu beachten, dass die so berechnete Schwenklast in ihrer Genauigkeit ebenfalls vom eingestellten Blattwinkel abhängen kann.

Somit wurde besonders erkannt, dass solche bereits aufgenommenen Schwenklasten zur Ermittlung der individuellen Blattleistung verwendet werden können.

Gemäß einem Aspekt wird vorgeschlagen, dass über wenigstens eine Rotordrehung ein zeitlicher Leistungsverlauf von der Windenergieanlage erzeugter Leistung erfasst wird, Leistungswerte des Leistungsverlaufs jeweils einer Rotorposition zugeordnet werden und aus den zugeordneten Leistungswerten die wenigstens eine individuelle Blattleistung ermittelt wird. Insbesondere ist dazu vorgesehen, dass die wenigstens eine individuelle Blattleistung unter weiterer Berücksichtigung einer über die Rotorfläche variierenden Windgeschwindigkeit ermittelt wird. Es kann also vorgesehen sein, die Windgeschwindigkeit mit zu erfassen und dabei auch zu erfassen, wie die Windgeschwindigkeit über die Rotorfläche variiert.

Es wurde hier besonders erkannt, dass aus dem zeitlichen Leistungsverlauf, wenn dieser über eine Umdrehung nämlich nicht konstant ist, ein Leistungswert jeweils einer Rotorposition und damit auch einer Blattposition und damit auch Rotorblättern zugeordnet werden kann. Dies soll an einem illustrativen Beispiel erläutert werden.

Wird von einer Zunahme der Windgeschwindigkeit mit der Höhe ausgegangen, kann jeweils in dem zeitlichen Leistungsverlauf eine maximale Leistung, also vom Generator erzeugte maximale Leistung, auftreten, wenn ein Rotorblatt nach oben zeigt, also in einer sogenannten 12-Uhr-Position ist. Über eine Rotorumdrehung könnten sich dann drei solcher maximalen Leistungswerte ergeben. Sind diese drei maximalen Leistungswerte gleich - in der Annahme, dass sich die Windgeschwindigkeit während dieser einen Drehung des Rotors nicht verändert hat - erzeugen alle Rotorblätter gleich viel Leistung, ihre individuelle Blattleistung wäre also gleich. Ist aber eine dieser maximalen Leistungen höher als die anderen beiden, erzeugt dieses Rotorblatt entsprechend mehr Leistung und dadurch kann auf die individuelle Blattleistung geschlossen werden.

Eine Bestimmung der Höhe der individuellen Blattleistung kann auch aus der Höhe dieser maximalen Blattleistung geschlossen werden. Zusammenhänge können aber in Offlineversuchen oder über Simulationen aufgenommen werden. Auch ist das genannte Beispiel nur vereinfachend und veranschaulichend zu verstehen und es wird vielmehr der gesamte zeitliche Leistungsverlauf aufgenommen.

Im Übrigen kann auch ein Turmdurchgang jeweils eines Rotorblattes Aufschluss über die individuelle Blattleistung geben. Wenn jeweils ein Rotorblatt etwa in 6-Uhr-Stellung ist, kommt es in den Windschatten des Turmes (der durch Staudruck auch vor dem Turm existiert), und aus dem Leistungsabfall kann auf die individuelle Blattleistung geschlossen werden. Ist der Leistungsabfall hierbei bei einem Rotorblatt höher als bei einem anderen, so ist bei diesem Rotorblatt mit höherem Leistungsabfall eine höhere individuelle Blattleistung anzunehmen. Auch hier können Simulationen oder Vergleichsmessungen die individuelle Blattleistung quantifizieren.

Besonders dann, wenn ein entsprechendes Messsystem wie ein Lidar vorhanden ist, kann eine dezidierte Berücksichtigung der über die Rotorfläche variierenden Windgeschwindigkeit erfasst und berücksichtigt werden. Dem zeitlichen Leistungsverlauf ist dann jeweils zuzuordnen, welches Rotorblatt welche Windgeschwindigkeit in dem Moment erfährt. Auch dadurch kann die individuelle Blattleistung erfasst und auch quantifiziert werden, auch hier können bspw. durch Simulationen, die Zusammenhänge hergestellt werden.

Gemäß einem Aspekt wird vorgeschlagen, dass das Ermitteln der individuellen Blattleistung für mehrere Umdrehungen des Rotors wiederholt wird, und/oder mit variierenden Blattwinkeln wiederholt wird, und/oder mit unterschiedlichen Rotordrehzahlen wiederholt wird, und/oder unter Berücksichtigung von Umgebungsbedingungen, insbesondere Wetterbedingungen, wiederholt wird.

Durch das Wiederholen für mehrere Umdrehungen des Rotors kann eine höhere Genauigkeit der ermittelten individuellen Blattleistung erzielt werden. Besonders können geringe Windschwankungen, die im Grunde immer auftreten, durch das Ermitteln über mehrere Umdrehungen des Rotors im Wesentlichen herausgemittelt werden.

Durch das Wiederholen des Ermittelns mit variierenden Blattwinkeln kann besonders auch eine Optimierung durchgeführt werden bzw. Daten für eine Optimierung gesammelt werden. Durch das Ermitteln der individuellen Blattleistung werden besonders Eigenschaften des Rotorblattes ermittelt bzw. dadurch auch validiert. Durch das Ermitteln für variierende Blattwinkel kann somit die Leistungsfähigkeit des Rotorblattes insgesamt beurteilt und auch validiert werden. Dadurch kann eine Eignung des Rotorblattes insgesamt bestimmt werden und bspw. Rückschlüsse gezogen werden, welche Blattwinkel für welchen Betriebspunkt sinnvoll sein können. Insbesondere kann auch ein optimaler Blattwinkel dadurch gefunden werden.

Durch das Ermitteln der individuellen Blattleistung mit unterschiedlichen Rotordrehzahlen können somit auch die Eigenschaften des betreffenden Rotorblattes für unterschiedliche Rotordrehzahlen und damit auch für unterschiedliche Windgeschwindigkeiten und Anströmbedingungen am Rotorblatt ermittelt und zur Beurteilung des Rotorblattes herangezogen werden.

Durch das Wiederholen unter Berücksichtigung von Umgebungsbedingungen, insbesondere Wetterbedingungen, können die gefundenen Ergebnisse diesen Umgebungsbedingungen zugeordnet werden. Es kann also zugeordnet werden, welche Blattleistung bei welchen Umgebungsbedingungen, also bei welchen Wetterbedingungen, insbesondere bei welcher Windgeschwindigkeit, ermittelt wurden. Dadurch kann die Eignung des Rotorblattes für die entsprechenden Umgebungs- oder Wetterbedingungen erfasst werden. Außerdem können besser Vergleiche bspw. mit anderen Rotorblättern gezogen werden. Solche Vergleiche sind besonders sinnvoll, wenn die Umgebungsbedingungen, insbesondere Wetterbedingungen, gleich sind, damit auch gleiche Ergebnisse verglichen werden. Waren bei solchen Untersuchungen unterschiedlicher Rotorblätter nicht genau die gleichen Umgebungsbedingungen vorhanden, z.B. nicht genau die gleichen Windgeschwindigkeiten, so kann dies durch eine Ausgleichsrechnung berücksichtigt werden.

Aber auch bei demselben Rotorblatt, das bspw. für unterschiedliche Umdrehungen, variierende Blattwinkel und/oder unterschiedliche Rotordrehzahlen untersucht wird, kann die Berücksichtigung, insbesondere Aufnahme, von Umgebungsbedingungen für einen späteren Vergleich und auch zum Bestimmen eines Gesamtbildes über die Eigenschaften des Rotorblattes hilfreich sein.

Neben Wetterbedingungen, insbesondere Windgeschwindigkeiten, aber auch Turbulenzhäufigkeiten oder Turbulenzintensitäten, können Umgebungsbedingungen auch Temperaturen betreffen, oder die Windrichtung im Zusammenhang mit Ort und Art von Hindernissen in der Umgebung.

Gemäß einem Aspekt wird vorgeschlagen, dass ein Wiederholzyklus des Ermittelns der individuellen Blattleistung durch Erkennen eines geänderten Blattwinkels eingeleitet wird, und/oder dass ein Wiederholzyklus durch Erkennen einer veränderten Rotordrehzahl eingeleitet wird, und/oder dass ein Wiederholzyklus durch Erkennen wenigstens einer geänderten Umgebungsbedingung, insbesondere Wetterbedingung, eingeleitet wird.

Ein Wiederholzyklus ist insoweit ein Zyklus, in dem das Ermitteln der individuellen Blattleistung wiederholt wird. Bspw. kann in einem Wiederholzyklus das Ermitteln der individuellen Blattleistung für fünf Umdrehungen des Rotors wiederholt werden. Es wird dann also fünfmal, nämlich jeweils für eine Umdrehung, die individuelle Blattleistung ermittelt. Aus diesen fünf Wiederholungen bzw. fünf ermittelten Blattleistungen kann insbesondere ein einziger Wert für eine Blattleistung ermittelt werden. Insbesondere über einen Mittelwert, der in diesem Beispiel genannten fünf ermittelten Blattleistungen. All dies ist dann in einem Wiederholzyklus erfolgt.

Ein Wiederholzyklus kann aber seinerseits auch eingeleitet und damit, wenn es nicht der erste ist, wiederholt werden. Bspw. erfolgt das bei Erkennen eines geänderten Blattwinkels. So kann, um das obige Beispiel wieder aufzugreifen, mit einem Blattwinkel das Ermitteln der individuellen Blattleistung fünfmal durchgeführt werden, nämlich jeweils für eine Umdrehung. Wird dann der Blattwinkel verändert, wird dies erkannt und ein neuer Wiederholzyklus eingeleitet. Dann kann bspw. erneut das Ermitteln der individuellen Blattleistung fünfmal erfolgen, nämlich für fünf Umdrehungen. Es kann aber auch für weitere Umdrehungen erneut wiederholt und fortgesetzt werden, solange der Blattwinkel unverändert bleibt.

Jedenfalls kann in jedem Wiederholzyklus das Ermitteln der individuellen Blattleistung mehrfach durchgeführt, also wiederholt werden, um dann einen gemeinsamen Wert zu erhalten. In einem weiteren Wiederholzyklus wird ein anderer Wert ermittelt, dem nämlich eine andere Situation beim Ermitteln zugrunde lag.

Auch bei einem geänderten Blattwinkel wird hiervon dem Erkennen eines solchen gesprochen, obwohl hierfür einfach ein entsprechendes Steuersignal verwendet werden kann. Das Erkennen des geänderten Blattwinkels muss also nicht bedeuten, dass dafür ein entsprechender Sensor verwendet und ausgewertet wurde.

Gleiches gilt für eine veränderte Rotordrehzahl, die der Steuerung natürlich bekannt ist. Aber das Einleiten eines Wiederholzyklus wird nach Erkennen einer veränderten Drehzahl ausgelöst. Das kann bedeuten, dass die Rotordrehzahl bspw. um einen vorbestimmten Wert sich verändert hat, bspw. einen prozentualen Wert.

Auch eine geänderte Umgebungsbedingung, insbesondere Wetterbedingung, wie eine veränderte Windgeschwindigkeit, können einen Wiederholzyklus, also einen neuen Wiederholzyklus, einleiten.

Hier wurde besonders erkannt, dass dadurch immer ein Wiederholzyklus für gleiche Bedingungen durchgeführt wird. Insbesondere kann das Wiederholen des Ermittelns der individuellen Blattleistung bei gleichen Bedingungen wiederholt werden. Ändern sich die Bedingungen, beginnt ein neuer Wiederholzyklus und es wird dann eine neue individuelle Blattleistung aufgenommen. Die in einem Wiederholzyklus ermittelte individuelle Blattleistung kann dann zusammen mit den in dem Moment vorherrschenden Bedingungen abgespeichert werden. Dadurch kann eine Gesamtdatenbank für individuelle Blattleistungen bei unterschiedlichen Bedingungen aufgestellt werden. Besonders wird somit die in einem Wiederholzyklus ermittelte individuelle Blattleistung zusammen mit dem Blattwinkel und/oder der Rotordrehzahl und/oder wenigstens einer Umgebungsbedingung, insbesondere einer Wetterbedingung, insbesondere einer Windgeschwindigkeit abgespeichert.

Gemäß einem Aspekt wird vorgeschlagen, dass zum Ermitteln der individuellen Blattleistung eines Rotorblatts eine Lastgröße des Rotorblattes, insbesondere im Bereich einer Blattwurzel des Rotorblattes, aufgenommen wird, unter Berücksichtigung des Blattwinkels eine Schwenklast bestimmt wird und in Abhängigkeit von der so bestimmten Schwenklast die individuelle Blattleistung des Rotorblatts ermittelt wird.

Als Schwenklast wird hier eine Last auf das Rotorblatt in Drehrichtung des Rotors verstanden. Eine Lastgröße des Rotorblattes kann insbesondere im Bereich der Blattwurzel des Rotorblattes durch entsprechende Kraftsensoren, insbesondere Dehnungsmessstreifen aufgenommen werden.

Kraftsensoren können sich auch auf Gussteilen befinden, bspw. auf einem Blattadapter, also einem Adapter zwischen Blattlager und Rotorblatt, die sich beim Verstellen des Blattwinkels mit dem Rotorblatt mitdrehen und damit in einem mitdrehenden Koordinatensystem sind, oder auf einem Nabenadapter, also einem Adapter zwischen Rotornabe und Blattlager, die sich beim Verstellen des Blattwinkels nicht mit dem Rotorblatt mitdrehen, und damit in einem nicht mitdrehenden Koordinatensystem sind.

Wenn die Kraftsensoren in einem mitdrehenden Koordinatensystem sind, drehen sie sich also bei der Verstellung des Rotorblatts in seinem Blattwinkel mit und geben somit jeweils eine Kraft bezogen auf eine Richtung des Rotorblattes an. Bspw. eine Dehnung in Richtung einer Sehne des Blattprofils, oder quer dazu. Unter Berücksichtigung der aktuellen Blattstellung, also des aktuellen Blattwinkels, kann aus dieser Kraftrichtung eine Kraftrichtung in Schwenkrichtung, also in Drehrichtung des Rotors, und damit die Schwenklast berechnet werden. Anschaulich gesprochen wirkt die Schwenklast in Richtung der Drehung und treibt den Rotor damit an. Die Schwenklast ist damit eine, die zur Rotorleistung und damit Blattleistung beiträgt. Vereinfacht ausgedrückt, kann die Schwenklast eines Rotorblattes als proportional zur individuellen Blattleistung angesehen werden.

Somit kann in Abhängigkeit von der so bestimmten Schwenklast die individuelle Blattleistung des Rotorblattes ermittelt werden.

Bspw. kann die Summe der Schwenklasten aller Rotorblätter im stationären Betrieb in Bezug auf die Generatorleistung gesetzt werden. Es ergibt sich dann ein Verhältnis zwischen der Summe aller Schwenklasten und der Generatorleistung, die hier vereinfacht mit der Rotorleistung gleichgesetzt wird, und dasselbe Verhältnis kann verwendet werden, um aus der Schwenklast eines Rotorblattes die individuelle Blattleistung dieses Rotorblattes zu berechnen.

Gemäß einem Aspekt wird vorgeschlagen, dass zum Bewerten von Blattkonfigurationen die Windenergieanlage mit unterschiedlich konfigurierten Blättern in einem Prüfbetrieb betrieben wird, und in dem Prüfbetrieb von einem oder mehreren der unterschiedlich konfigurierten Rotorblättern jeweils eine Last als Prüflast aufgenommen wird, und die wenigstens eine Prüflast mit wenigstens einer weiteren Prüflast und/oder mit einer Referenzlast verglichen wird, und abhängig von dem Vergleich des Leistungsvermögens des wenigstens einen Rotorblattes bewertet wird.

Hier ist also die Idee, die Windenergieanlage mit unterschiedlichen Rotorblättern zugleich zu betreiben. Dadurch dass individuelle Blattleistungen bestimmt werden können, kann somit eine Bewertung mehrerer, unterschiedlicher Rotorblätter zugleich durchgeführt werden. Hier wird besonders vorgeschlagen, für jedes der unterschiedlich konfigurierten Rotorblätter jeweils eine Last als Prüflast aufzunehmen. Werden also drei unterschiedlich konfigurierte Rotorblätter verwendet, können drei Prüflasten aufgenommen werden. Das ist besonders effizient, aber möglicherweise gibt es Situationen, in denen nur ein neues Blatt oder zwei neue Blätter zum Testen überhaupt zur Verfügung stehen. Unterschiedlich konfigurierte Blätter können insoweit unterschiedliche Rotorblätter sein und/oder Rotorblätter mit unterschiedlichen Anbauteilen, also bspw. unterschiedlichen und/oder unterschiedlich vielen und/oder an unterschiedlichen Stellen angeordneten Vortex-Generatoren. Auch andere aerodynamische Elemente des Rotorblatts können dort verändert werden, wie bspw. eine Blatthinterkante.

Es wird nun zu jedem bzw. jedem relevanten Rotorblatt eine Prüflast aufgenommen und diese Prüflasten können dann untereinander verglichen werden. Dieser Vergleich hat den großen Vorteil, dass identische Bedingungen vorlagen, insbesondere natürlich dieselbe Rotordrehzahl und im Wesentlichen auch dieselben Windbedingungen oder auch andere Umgebungsbedingungen. Dadurch liegen tatsächlich gleiche Bedingungen vor und Unterschiede in den Prüflasten deuten auf unterschiedliche Resultate aufgrund der unterschiedlich konfigurierten Rotorblätter hin. Dadurch können die entsprechend konfigurierten Rotorblätter gut bewertet werden.

Gemäß einem Aspekt wird vorgeschlagen, dass zur Erfassung oder Bestimmung eines aus einer Blattveränderung eines der Rotorblätter resultierenden veränderten Blattleistungsvermögens in einem ersten Schritt die Windenergieanlage ohne die Blattveränderung in einem Referenzbetrieb betrieben wird, insbesondere mit gleichen Rotorblättern. In diesem Referenzbetrieb werden Lasten der Rotorblätter als Referenzlasten aufgenommen. In einem zweiten Schritt wird die Windenergieanlage mit der Blattveränderung in einem Prüfbetrieb betrieben, wobei die Blattveränderung nur für eines der Rotorblätter vorgenommen wird. Die unveränderten Rotorblätter können als Referenzrotorblätter angesehen werden. In dem Prüfbetrieb werden Lasten der Rotorblätter als Prüflasten aufgenommen.

In Abhängigkeit von den aufgenommenen Referenzlasten und den aufgenommenen Prüflasten wird eine veränderte individuelle Blattleistung ermittelt und in Abhängigkeit von der veränderten individuellen Blattleistung das veränderte Blattleistungsvermögen ermittelt. Das Blattleistungsvermögen, und damit auch das veränderte Blattleistungsvermögen beschreibt eine Eigenschaft des Rotorblatts, Leistung aus dem Wind in eine Teildrehleistung umzuwandeln. Diese Eigenschaft kann hier aus der aktuellen Blattleistung abgeleitet werden, die im Grunde eine Momentanleistung beschreibt, bzw. konkret angibt, insbesondere als Leistungswert in Watt.

Das Blattleistungsvermögen kann bspw. als Wirkungsgrad angegeben werden, oder als prozentualer Wert bezogen auf das Referenzrotorblatt. Das Blattleistungsvermögen kann aber auch als komplexerer Zusammenhang angegeben werden, der nämlich das Vermögen, Leistung aus Wind umzuwandeln, für unterschiedliche Anströmwinkel beschreiben kann. Bspw. kann dafür ein Wirkungsgradverlauf über einen Anströmwinkel oder Blattwinkel angegeben werden, der den Wirkungsgrad entsprechend für unterschiedliche Anströmwinkel bzw. Blattwinkel angibt.

Es kann zunächst erreicht werden, dass durch den Referenzbetrieb eine gute Vergleichssituation geschaffen wird, mit der der Betrieb der Windenergieanlage im Prüfbetrieb verglichen werden kann. Insbesondere wird versucht, im Referenzbetrieb und im Prüfbetrieb gleiche Bedingungen zu haben, also insbesondere bei gleicher Windgeschwindigkeit, gleichem Blattwinkel und gleicher Rotordrehzahl Referenzbetrieb und Prüfbetrieb durchzuführen. Geringe Abweichungen der Windgeschwindigkeit, die leicht auftreten können, können gegebenenfalls herausgerechnet werden.

Zusätzlich wird dann aber vorgeschlagen, ein Rotorblatt zu tauschen oder anders zu konfigurieren, insbesondere durch aerodynamische Anbauteile, und dann den Prüfbetrieb durchzuführen. Der Prüfbetrieb kann dann einerseits mit dem Referenzbetrieb verglichen werden, andererseits können aber auch die Rotorblätter untereinander verglichen werden. Das ist besonders durch die Erfassung der individuellen Blattleistung möglich.

Gemäß einem Aspekt wird vorgeschlagen, dass zur Blattveränderung nur für eines der Rotorblätter Anbauteile ergänzt, entfernt und/oder verändert werden, oder für mehrere Rotorblätter unterschiedliche Anbauteile ergänzt, entfernt und/oder verändert werden, und in Abhängigkeit des ermittelten veränderten Leistungsvermögens und/oder veränderten individuellen Blattleistung eine Validierung für das veränderte Rotorblatt durchgeführt wird.

Damit kann eine individuelle Veränderung eines Rotorblatts durchgeführt werden und ihre Auswirkung unmittelbar erfasst und dem Rotorblatt zugeordnet werden. Besonders die Wirkung von Anbauteilen kann dadurch untersucht werden. Besonders dann, wenn für mehrere Rotorblätter unterschiedliche Anbauteile ergänzt, entfernt und/oder verändert werden, kann die Wirkung dieser Anbauteile effizient getestet werden, da mehrere Konfigurationen in einem Durchlauf getestet und dadurch verglichen werden können. Darauf aufbauend kann dann das Leistungsvermögen bzw. die individuelle Blattleistung als tatsächliches Ergebnis erkannt werden und darauf aufbauend eine Validierung für das veränderte Rotorblatt durchgeführt werden.

Gemäß einem Aspekt wird vorgeschlagen, dass in Abhängigkeit von den ermittelten individuellen Blattleistungen eine Leistungsüberwachung durchgeführt wird, wobei insbesondere die ermittelten individuellen Blattleistungen als Blattleistungsverläufe aufgenommen werden, und zur Leistungsüberwachung die Blattleistungsverläufe der Rotorblätter verglichen werden.

Somit werden nicht nur einzelne Werte als individuelle Blattleistungen aufgenommen und gegebenenfalls verglichen, sondern es wird eine umfassende Leistungsüberwachung vorgeschlagen. Durch das Vergleichen von Blattleistungsverläufen kann die Leistungsüberwachung der Rotorblätter durchgeführt werden. Dadurch kann erkannt werden, ob ein Rotorblatt jeweils insgesamt, also immer oder überwiegend bessere oder schlechtere Leistungswerte aufweist, oder ob diese nur in bestimmten Situationen vorliegen. Abhängig von der Leistungsüberwachung können auch Betriebskennlinien für das betreffende Rotorblatt bestimmt werden. Eine solche Leistungsüberwachung kann auch blattwinkelabhängige Blattleistungen aufweisen und davon abhängig können dann geeignete Blattwinkel ausgewählt werden.

Gemäß einem Aspekt wird vorgeschlagen, dass Blattleistungsverläufe als Verläufe über wenigstens eine Rotordrehung aufgenommen werden und in Bezug auf eine umlaufende Rotorposition des jeweiligen Rotorblatts gesetzt werden, um Werte der Blattleistungsverläufe jeweils für die gleiche Rotorposition zu vergleichen. Insbesondere wird vorgeschlagen, dass alle Blattleistungsverläufe auf eine gleiche Blattposition referenzieren, so dass ihre Werte immer zu jeweils gleichen Blattpositionen verglichen werden.

Besonders ist zu erwarten, dass sich das Windfeld im Bereich der Rotorfläche besonders, aber nicht nur, mit der Höhe stark verändern kann. Meist ist weiter unten die Windgeschwindigkeit geringer als weiter oben. Dabei können heutzutage Rotorflächen, also die Fläche, die vom Rotor überstrichen wird, Durchmesser von 150 Metern haben. Hinzu können Unterschiede im Bereich des Turmdurchgangs kommen. Bei der Berücksichtigung der individuellen Blattleistung über Blattlasten kann auch eine Gravitationskomponente hinzukommen. Eine solche Gravitationskomponente kann bei guter Kenntnis herausgerechnet werden, aber soweit dies nicht vollständig gelingt, ist für alle Rotorblätter mit einer ähnlichen Gravitationskomponente zu rechnen, soweit jeweils dieselben Rotorpositionen verglichen werden.

Jedenfalls können hier Blattleistungsverläufe hinsichtlich ihrer Rotorposition so verschoben werden, dass die Blattleistungsverläufe aller drei Rotorblätter besonders eine gleiche Rotorposition, z.B. 6-Uhr-Position, als Referenzwert haben. Hierdurch können die Blattleistungsverläufe als Diagramme oder in einem Diagramm übereinandergelegt werden. Variationen, die sich über die Drehung des Rotors ergeben, sollten dann im Wesentlichen bei allen drei Rotorblättern und damit allen drei Blattleistungsverläufen gleichermaßen auftreten. Solche Variationen können dadurch den Vergleich der Rotorblätter bzw. ihrer Blattleistungsverläufe nicht mehr verfälschen.

Bspw. kann der Blattleistungsverlauf eines Rotorblattes als Referenz dienen und unverändert bleiben, während die Blattleistungsverläufe der anderen beiden Rotorblätter um 120° bzw. 240° (oder -120°) relativ zur Referenz verschoben werden. Zum Vergleich können dann jeweils zwei dieser so verschobenen Blattleistungsverläufe voneinander abgezogen werden.

Gemäß einem Aspekt wird vorgeschlagen, dass in Abhängigkeit von der ermittelten individuellen Blattleistung Blattwinkel des jeweiligen Rotorblatts untersucht, insbesondere vermessen werden, wobei im Betrieb ein Rotorblatt in seinem Blattwinkel verändert wird, insbesondere kontinuierlich oder in mehreren Schritten. Dies kann erfolgen bis sich die individuelle Blattleistung dieses Rotorblatts verringert, insbesondere bis sich die individuelle Blattleistung dieses Rotorblattes relativ verringert, bezogen auf eine durch die übrigen Rotorblätter ermittelte Referenzblattleistung.

Hierdurch können unterschiedliche Rotorblätter, die an der Windenergieanlage installiert sind, was auch beinhaltet, wenn gleiche Rotorblätter mit unterschiedlichen Anbauteilen vorgesehen sind, untersucht und vermessen werden. Dadurch ist es möglich, eine solche Validierung und/oder Vermessung von Rotorblättern im Grunde in einem Drittel der Zeit durchzuführen, verglichen damit, dass bei einer Untersuchung ansonsten immer genau drei gleiche Rotorblätter vorhanden und analysiert werden. Besonders durch das Verändern des Blattwinkels, bis sich die individuelle Blattleistung des Rotorblattes verringert, kann erkannt werden, in welchem Bereich bezogen auf den Blattwinkel das Blatt optimale Leistung abgibt, und ab wo dieser Bereich verlassen wird.

Gemäß einem Aspekt wird vorgeschlagen, dass das in seinem Blattwinkel veränderte Rotorblatt bis zu einem Stallbetrieb dieses Rotorblatts verändert wird, und der Blattwinkel, bei dem der Stallbetrieb einsetzt, als Stallblattwinkel erfasst wird und das Rotorblatt kennzeichnet. Ein solcher Stallblattwinkel ist eine wichtige Eigenschaft des Rotorblattes. Einerseits kann ein Betrieb oder eine Betriebskennlinie eine Windenergieanlage darauf abgestimmt sein, nämlich, dass die Windenergieanlage so betrieben wird, dass dieser Stallblattwinkel vermieden wird.

Andererseits können dadurch auch Rotorblätter untereinander verglichen werden, nämlich wieweit ein solcher Stallblattwinkel von einem optimalen, also leistungsoptimalen, Blattwinkel entfernt ist. Vereinfacht ausgedrückt ist das Rotorblatt umso toleranter gegen Schwankungen eines Anströmwinkels, je größer ein Abstand zwischen optimalem Blattwinkel und Stallblattwinkel ist. Entsprechend kann auch bei ansonsten gleichen Eigenschaften dasjenige Rotorblatt ausgewählt oder favorisiert werden, das einen größeren Abstand zwischen optimalem Blattwinkel und Stallblattwinkel aufweist.

Gemäß einem Aspekt wird vorgeschlagen, dass die Untersuchung des Blattwinkels, insbesondere das Erfassen des Stallblattwinkels bei gleichzeitiger Erfassung einer Schnelllaufzahl erfolgt und der so erfassten Schnelllaufzahl zugeordnet wird und diese Zuordnung zur Kennzeichnung des Rotorblatts abgespeichert wird, insbesondere in einem Look-up-Table bzw. einer Datenbank. Damit kann das betreffende Rotorblatt entsprechend charakterisiert werden und anhand von dieser Charakterisierung kann ein geeignetes Rotorblatt ausgewählt werden. Ebenfalls kann eine Windenergieanlage mit einem solchen Rotorblatt gemäß einer solchen Charakterisierung entsprechend betrieben werden. Es kann besonders je nach Schnelllaufzahl auf die Daten zugegriffen werden und erkannt werden, wieviel Reserve bis zu einem Stallbereich vorhanden ist. Die Anlage kann dann auch über unterschiedlichen Schnelllaufzahlen so betrieben werden, dass ein Stallbereich vermieden wird.

Gemäß einem Aspekt wird vorgeschlagen, dass zur Verbesserung, insbesondere Optimierung des Betriebs der Windenergieanlage für wenigstens ein Rotorblatt sukzessive jeweils der Blattwinkel verändert wird und Änderungen der individuellen Blattleistung jeweils des im Blattwinkel veränderten Rotorblatts erfasst werden. Insbesondere ist vorgesehen, dass individuelle Blattleistungen der unveränderten Rotorblätter als Referenzblattleistung verwendet werden. In diesem Fall werden dann nicht alle drei Rotorblätter verändert, sondern allenfalls zwei.

Somit wird wenigstens ein Rotorblatt nach und nach in seinem Blattwinkel verstellt und es wird die Auswirkung auf die individuelle Blattleistung dieses Rotorblatts überprüft. Erhöht sich die individuelle Blattleistung, kann auf eine Verbesserung durch ihre Blattverstellung geschlossen werden. Dadurch, dass mehrere Rotorblätter zugleich verändert werden können, für die dann jeweils die Veränderung der individuellen Blattleistung beobachtet wird, können schneller Verbesserungsmöglichkeiten erkannt werden, im Vergleich zu einer Variante, bei der alle Rotorblätter zugleich verändert werden, um einen Einfluss auf die insgesamt erzeugte Leistung zu prüfen.

Dadurch, dass ein Rotorblatt unverändert bleibt, kann es als Referenz verwendet werden, und es können Leistungsschwankungen, die durch Windschwankungen bedingt sind, herausgerechnet werden. Schwankungen der individuellen Blattleistung des Referenzrotorblattes sind auf Windschwankungen zurückzuführen und davon abweichende Änderungen der individuellen Blattleistung bei dem Rotorblatt oder den Rotorblättern, bei denen eine Veränderung des Blattwinkels erfolgt, sind dann auf diese Veränderungen des Blattwinkels zurückzuführen.

Die Optimierung kann aber auch ohne Berücksichtigung einer Referenzblattleistung eines Referenzrotorblattes durchgeführt werden, also auch dann, wenn alle Rotorblätter in ihrem Blattwinkel verändert werden. Dies kann so erfolgen, dass in einem ersten Schritt ein Rotorblatt in seinem Blattwinkel gegenüber den anderen Blattwinkeln verringert oder erhöht wird. Das kann für ein Rotorblatt, für zwei oder für alle Rotorblätter durchgeführt werden, wobei dann, wenn die Blattwinkel mehrerer Rotorblätter verändert werden, diese zweckmäßigerweise unterschiedlich verändert werden.

In einem zweiten Schritt kann verglichen werden, welches Blatt die höchste Leistung, also die höchste individuelle Blattleistung erbringt.

In einem dritten Schritt können dann die Blattwinkel aller Rotorblätter auf den Winkel des Rotorblatts eingestellt werden, welches gemäß Schritt zwei die höchste Leistung, also höchste individuelle Blattleistung erzielt hat.

Der erste bis dritte Schritt können wiederholt werden, um dadurch eine Verbesserung oder sogar Optimum durch eine entsprechende Iteration zu erreichen.

Vorzugsweise erfolgt eine solche Optimierung gemäß den Schritten 1 bis 4 zu Beginn einer Inbetriebnahme oder Wiederinbetriebnahme, um dann einen guten Blattwinkel für alle Rotorblätter zu finden. Diese Routine, also die Schritte 1 bis 4, können regelmäßig wiederholt werden, wobei vorgeschlagen wird, nach einer ersten Optimierung gemäß Schritt 3 die Wiederholungen seltener durchzuführen. Sobald ein optimaler Blattwinkel auf diese Art und Weise gefunden wurde, kann das Verfahren der Optimierung in diesem Sinne auch eingestellt werden, aber durch Veränderungen, die immer wieder auftreten können, z.B. durch Blattverschmutzung, auftretenden Regen oder wieder beendeten Regen, kann es sinnvoll sein, gelegentlich die genannten Optimierungsschritte zu wiederholen, da solche Änderungen aber nicht häufig und nicht schnell erfolgen, können diese Optimierungsschritte dann seltener durchgeführt werden.

Es ist zu bemerken, dass ein optimaler Blattwinkel von vielen Faktoren abhängen kann, dazu gehören bspw. Schnelllaufzahl, Drehzahl, abgegebene oder erzeugte Leistung, Luftdichte, dass Regen vorhanden ist, oder dass kein Regen vorhanden ist, und Windscherung.

Gemäß einem Aspekt wird vorgeschlagen, eine Datenbank mit optimalen Blattwinkeln, je nach Randbedingungen, anzulegen, und im Betrieb je nach Randbedingungen den optimalen Blattwinkel daraus auszuwählen bzw. zu interpolieren.

Gemäß einem Aspekt wird vorgeschlagen, nach einer Änderung von Randbedingungen den Blattwinkel jeweils wieder neu zu optimieren. Vorzugsweise wird dabei die vorstehend genannte Datenbank als Ausgangspunkt für die iterative Blattwinkeloptimierung verwendet, falls eine solche Datenbank vorhanden ist. Optional könnte anschließend der Datenbankeintrag für die jeweiligen Randbedingungen aktualisiert werden. Dazu kann eine gewichtete Mittelung des neuen mit dem alten optimalen Blattwinkel für die entsprechenden Randbedingungen durchgeführt werden.

Gemäß einem Aspekt wird vorgeschlagen, dass in Abhängigkeit von der erfassten Änderung der individuellen Blattleistung des im Blattwinkel veränderten Rotorblattes ein optimaler Blattwinkel identifiziert wird, und der optimale Blattwinkel jeweils einer Betriebssituation, insbesondere einer erfassten Schelllaufzahl zugeordnet wird und mit der zugeordneten Betriebssituation in einer Datenbank abgespeichert wird. Auch dies betrifft, wie der vorige Aspekt, einen Rotor mit drei gleichen Rotorblättern und für diese drei gleichen Rotorblätter wird somit gemäß der mit vorigem Aspekt beschriebenen Art und Weise ein verbesserter, insbesondere optimaler Blattwinkel gefunden.

Mit diesem optimalen Blattwinkel ist dann aber der gesamte Rotor zu betreiben, der Blattwinkel ist also bei allen Rotorblättern des Rotors einzustellen. Entsprechend wird dieser Blattwinkel zusammen mit der Betriebssituation, in der er aufgetreten ist, abgespeichert. Dadurch kann eine Datenbank aufgebaut werden und immer dann, wenn diese Betriebssituation wieder eintritt, kann der Blattwinkel verwendet werden, der dazu als optimaler Blattwinkel hinterlegt ist. Für Betriebssituationen, für die keine Daten hinterlegt sind, kann eine Interpolation basierend auf abgespeicherten Daten zweier ähnlicher Betriebssituationen durchgeführt werden.

Gemäß einem Aspekt wird vorgeschlagen, dass der optimale Blattwinkel für jedes Rotorblatt in Abhängigkeit von einer Drehposition des Rotorblatts erfasst und abgespeichert wird, und/oder in Abhängigkeit von mehreren erfassten optimalen Blattwinkeln ein von der Blattposition abhängiger sinusförmiger Verlauf abgeleitet wird.

Auch hier geht es, wie in den vorigen beiden Aspekten, um einen Rotor mit gleichen Rotorblättern. Hier liegt zusätzlich der Gedanke zugrunde, die Windenergieanlage mit einer Einzelblattverstellung zu betreiben. Eine Einzelblattverstellung bedeutet, dass Rotorblätter einzeln, also im Wesentlichen unabhängig von den übrigen Rotorblättern, verstellt werden. Hier ist besonders vorgesehen, dass der Rotorblattwinkel an die jeweilige Drehposition des Rotorblatts angepasst wird. Mit anderen Worten kann vorgesehen sein, dass ein Rotorblatt in 6-Uhr-Stellung einen anderen Blattwinkel aufweist als in 12-Uhr-Stellung. Bei jeder Umdrehung des Rotors verändert daher das Rotorblatt seinen Blattwinkel. Das Rotorblatt hat dann also, um dieses Beispiel wieder aufzugreifen, in 6-Uhr-Stellung einen anderen Blattwinkel als in 12-Uhr-Stellung. Zwischen diesen Blattwinkeln kann das Rotorblatt im laufenden Betrieb ständig, insbesondere kontinuierlich, wechseln. Da die drei Rotorblätter eines Rotors naturgemäß zu einem Zeitpunkt immer in unterschiedlichen Drehpositionen sind, nehmen die Rotorblätter, wenn ihre Blattwinkel während einer Umdrehung des Rotors ständig verstellt werden, zu gleichen Zeitpunkten unterschiedliche Blattwinkel ein.

Entsprechend kann ein Blattwinkelverlauf für jedes Rotorblatt vorgesehen sein, der von der Drehposition abhängt. Ein solcher Verlauf kann besonders sinusförmig aussehen und entsprechend kann aus erfassten optimalen Blattwinkeln über nur wenige Drehpositionen ein solcher sinusförmige Verlauf parametriert werden. Ein solcher Verlauf ist dann für jedes Rotorblatt gleich, bezogen auf die Drehposition. Zeitlich sind solche Verläufe allerdings für die drei Rotorblätter eines Rotors zueinander verschoben, nämlich um ein Drittel der Zeit, die der Rotor in dem Moment für eine Rotorumdrehung benötigt.

Gemäß einem Aspekt wird vorgeschlagen, dass die individuellen Blattleistungen über wenigstens einen Rotorumlauf für alle Rotorblätter der Windenergieanlage als Blattleistungsverläufe bestimmt werden und die Blattleistungsverläufe verglichen werden und aus dem Vergleich Blattabweichungen als Abweichungen gegenüber einem normalen Rotorblatt abgeleitet werden. Solche Blattabweichungen können neben Blattfehlstellungen auch eine Verschmutzung, insbesondere Verschmutzungsgrad, eine Vereisung, oder Beschädigungen sein. Beschädigungen können darin bestehen, dass Anbauteile abgefallen sind, so dass also das Rotorblatt als solches weiterbetrieben werden kann. Auch eine Abnutzung kann eine Abweichung gegenüber einem normalen Rotorblatt sein.

Ein normales Rotorblatt ist insoweit eines, das die Eigenschaften aufweist, von denen beim Errichten der Windenergieanlage und damit Installieren des Rotorblattes ausgegangen wird. Optional können solche Blattabweichungen behoben werden, sobald sie erkannt wurden. Das Beheben kann eine Reparatur beinhalten, also bspw. das Wiederanbauen eines abgefallenen Anbauteils. Das Beheben kann auch eine Reinigung des Rotorblattes betreffen, oder das Enteisen. Auch ein abgeänderter, alternativer Betriebsmodus könnte eingeleitet werden. Ziel des abgeänderten Betriebsmodus könnte sein, die Windenergieanlage vor unzulässig hohen Betriebs- oder Extremlasten zu schützen, die durch die aerodynamische Rotorunwucht entstehen könnte.

Außerdem oder alternativ wird vorgeschlagen, dass aus dem Vergleich der Blattleistungsverläufe ein abweichender Blattwinkel, insbesondere eine Blattfehlstellung abgeleitet und optional korrigiert wird. Eine Blattfehlstellung kann auch eine Blattabweichung als Abweichung gegenüber einem normalen Rotorblatt sein. Eine Blattfehlstellung bezeichnet eine Abweichung zwischen tatsächlichem Blattwinkel und einem angenommenen Blattwinkel. Der angenommene Blattwinkel kann insbesondere einer sein, der durch einen entsprechenden Sensor erfasst wurde. Ein angenommener Blattwinkel kann sich aber auch aus einer guten Kenntnis der durchgeführten Blattverstellung ergeben.

Eine Blattfehlstellung, bei der ein durch einen Sensor erfasster Blattwinkel von dem tatsächlichen abweicht, kann durch eine ungenaue Montage des Rotorblattes bzw. des Blattsensors hervorgerufen sein. Es kommt aber auch eine Sensordrift in Betracht, wenn der entsprechende Blattwinkelsensor keinen absoluten Marker aufweist. Eine Abweichung kann sich auch ergeben, wenn der Blattwinkel sich aus den durchgeführten Blattverstellvorgängen ergibt. Blattverstellvorgänge werden oftmals über die Vorgabe von Pitchraten, also Verstellgeschwindigkeiten für die Blattwinkel ausgeführt. Ein absoluter Blattwinkel ergibt sich dann aus einem Anfangsblattwinkel und einer Integration über diese Pitchrate, was anfällig für eine Drift sein kann.

Besonders im Falle der Erkennung einer Blattfehlstellung kann diese leicht dadurch korrigiert werden, dass der Sensor neu kalibriert wird oder in der Software oder dem Prozessrechner, der zur Steuerung der Blattverstellung oder ihrer Auswertung verwendet wird, ein entsprechender Offset vorgesehen wird.

Außerdem oder alternativ wird vorgeschlagen, dass das individuelle Blattleistungsvermögen aus einem Lastsignal eines Schlaglastsensors abgeleitet wird, insbesondere ohne Verwendung eines Lastsignals eines Schwenklastsensors. Ein Schwenklastsensor ist ein Sensor, der eine Last in Drehrichtung des Rotors aufnimmt, wenn das Rotorblatt in einer üblichen Betriebsstellung ist, also im Wesentlichen einen Blattwinkel von 0° aufweist. Ein Schlaglastsensor ist einer, der in dieser Blattstellung eine Last senkrecht zur Rotorfläche aufnimmt.

Die beiden Sensoren, also sowohl der Schwenklastsensor als auch der Schlaglastsensor, von denen jeweils aber auch mehrere vorgesehen sein können, sind üblicherweise im Bereich der Blattwurzel am Rotorblatt angeordnet, werden also bei Veränderung des Blattwinkels mit verändert. Zur Bestimmung eines individuellen Blattleistungsvermögens, insbesondere einer individuellen Blattleistung, ist das Drehmoment in Drehrichtung von Bedeutung, also die Schwenklast. Werden die Rotorblätter aber verdreht, so kann auch aus dem Schlaglastsensor eine Last in Schwenkrichtung abgeleitet werden und für eine Berechnung des individuellen Blattleistungsvermögens, insbesondere der individuellen Blattleistung, verwendet werden.

Besonders dann, wenn eine Windenergieanlage keinen Schwenklastsensor aufweist, ist es vorteilhaft, das individuelle Blattleistungsvermögen bzw. die individuelle Blattleistung ohne Berücksichtigung eines solchen Lastsignals eines Schwenklastsensors zu bestimmen. Unter Berücksichtigung des konkreten Blattwinkels ist dies somit auch durch einen Schlaglastsensor möglich. Das wurde hier erkannt und wird als Lösung vorgeschlagen.

Es wurde aber auch erkannt, dass manche Blattabweichungen allein aus einer Schlaglast bestimmt werden können. Hierzu kann auch eine Blattfehlstellung gehören, bei der sich je nach Blattwinkel allein aus der Schubkraft des Windes auf das Rotorblatt, besonders, wenn dieses etwa im Bereich von 0° eingestellt ist, eine Fehlstellung ableiten lässt. Die Fehlstellung führt zu einer veränderten Schlaglast und ist damit ein Indikator für diese Blattfehlstellung.

Es wurde auch erkannt, dass Unterschiede allein aufgrund der Schlaglast Rückschlüsse auf andere Blattabweichungen, wie Verschmutzungen, Vereisung oder auch abgefallenen Anbauteilen, zulässt.

Gemäß einem Aspekt wird vorgeschlagen, dass beim Vergleich von geänderten Rotorblättern Randbedingungen, insbesondere Umweltbedingungen aufgenommen und berücksichtigt werden. Solche Umweltbedingungen können Windgeschwindigkeit, Luftdichte und/oder Luftfeuchte sein. Solche Umweltbedingungen haben Einfluss auf den Betrieb der Windenergieanlage und damit auch auf das Leistungsvermögen der Rotorblätter, und insbesondere auch auf die individuellen Blattleistungen der Rotorblätter. Durch die Berücksichtigung dieser Randbedingungen können die erfassten Blattleistungsvermögen bzw. Blattleistungen diesen Randbedingungen zugeordnet werden. Dadurch kann eine Bewertung der Rotorblätter präzisiert werden. Insbesondere ist ein genauer Vergleich von Rotorblättern möglich, wenn jeweils Blattleistungsvermögen bzw. Blattleistungen für gleiche Randbedingungen verglichen werden.

Somit wird besonders vorgeschlagen, Vergleiche zu gleichen oder zumindest ähnlichen Randbedingungen zu ziehen und/oder geänderte Randbedingungen über eine Umrechnungsvorschrift zu berücksichtigen, insbesondere geänderte Randbedingungen herauszurechnen. Hier geht es besonders um Randbedingungen, die ähnlich sind. Hier können, wenn ein Blattleistungsvermögen oder eine Blattleistung für zwei ähnliche Randbedingungen eines Rotorblattes vorliegen, Werte für weitere in der Nähe liegenden Randbedingungen durch Interpolation oder Extrapolation, je nachdem wo diese Randbedingungen liegen, berücksichtigt werden.

Gemäß einem Aspekt wird vorgeschlagen, dass zum Erfassen von Randbedingungen, insbesondere Umweltbedingungen, eine separate Messeinrichtung, insbesondere ein Windmessmast verwendet wird. Hier wurde erkannt, dass durch eine solche separate Messeinrichtung Messungen höherer Genauigkeit oder höherer Güte durchgeführt werden können. Insbesondere wurde erkannt, dass der Rotor selbst Messeinrichtungen an der Windenergieanlage beeinflussen kann. Gegebenenfalls ist die Beeinflussung sogar abhängig von dem konkreten Rotorblatt. Dadurch können die Bewertungen verfälscht werden, wenn somit unterschiedliche Randbedingungen aufgrund solcher Messfehler angenommen werden. Durch eine separate Messeinrichtung, insbesondere separat zur Windenergieanlage, wie bspw. ein Windmessmast, werden solche Einflüsse des Rotors auf die Messeinrichtung vermieden.

Erfindungsgemäß wird auch eine Windenergieanlage vorgeschlagen, wobei die Windenergieanlage einen aerodynamischen Rotor mit mehreren, eine Rotorfläche überstreichenden Rotorblättern aufweist, und
- jedes Rotorblatt eine Blattwurzel mit einem Blattwurzelbereich aufweist und in seinem Blattwinkel verstellbar ist; und
- die Windenergieanlage dazu vorbereitet ist, ein Verfahren zum Validieren der Windenergieanlage oder einer Komponente der Windenergieanlage auszuführen, mit dem
- für wenigstens eines der Rotorblätter jeweils aus erfassten Betriebsdaten der Windenergieanlage ein individuelles Blattleistungsvermögen, und/oder eine individuelle Blattleistung ermittelt wird, wobei
- das individuelle Blattleistungsvermögen ein Vermögen eines Rotorblattes beschreibt, Leistung aus Wind in eine Teildrehleistung zum Drehen des Rotors umzuwandeln, und die individuelle Blattleistung eine Leistung der Höhe nach bezeichnet, die das jeweilige Rotorblatt aus dem Wind in eine Teildrehleistung zum Drehen des Rotors umwandelt, sodass eine Summe der individuellen Blattleistungen aller Rotorblätter des Rotors eine gesamte Drehleistung des Rotors ergibt.

Die Windenergieanlage ist insbesondere dadurch dazu vorbereitet, das Verfahren zum Bewerten der Windenergieanlage auszuführen, dass ein solches Verfahren in der Windenergieanlage, insbesondere in einem Prozessrechner und/oder in einer Anlagensteuerung implementiert ist.

Gemäß einem Aspekt wird vorgeschlagen, dass die Windenergieanlage eine Steuereinrichtung aufweist, mit der die Windenergieanlage gesteuert werden kann und Messsignale aufgenommen und verarbeitet werden können. Über eine solche Steuereinrichtung kann die Windenergieanlage somit nicht nur gesteuert werden, sondern es können auch Messsignale aufgenommen und verarbeitet werden, nämlich insbesondere so, wie zum Ausführen eines Verfahrens gemäß wenigstens einem der vorstehend erläuterten Aspekte vorgeschlagen wird.

Außerdem oder alternativ wird vorgeschlagen, dass die Windenergieanlage, insbesondere die Steuereinrichtung, dazu vorbereitet ist, ein Verfahren gemäß einem der vorstehend erläuterten Aspekte auszuführen, bzw. entsprechende Verfahrensschritte eines solchen Verfahrens zu initiieren. Das Verfahren gemäß den vorstehend erläuterten Aspekten beinhaltet Steuerungs- und Auswerteschritte, die durch die Steuereinrichtung durchgeführt werden können. Es beinhaltet aber auch Schritte wie ein Rotorblatt auszutauschen oder Anbauteile zu verändern, oder ein Rotorblatt zu reinigen. Solche Tätigkeiten kann eine Steuereinrichtung naturgemäß nicht ausführen, aber initiieren. Ein solches Initiieren kann besonders dadurch erfolgen, dass eine entsprechende Aufforderung auf einem Display ausgegeben wird, oder über eine Fernverbindung als Signal an eine Steuerzentrale gegeben wird, damit dann insbesondere Servicepersonal diese Tätigkeiten, wie den Tausch eines Rotorblatts, vornehmen.

Die Steuereinrichtung kann Teil einer Anlagensteuerung sein oder der Anlagensteuerung entsprechen.

Gemäß einem Aspekt wird vorgeschlagen, dass die Windenergieanlage, insbesondere ihre Steuereinrichtung, dazu vorbereitet ist, individuelle Rotorblätter am Rotor zu identifizieren und einer Montageposition am Rotor zuzuordnen. Diese Funktionalität der Windenergieanlage ist besonders vorgesehen, damit individuelle Blattbewertungen bzw. Blattvalidierungen auch dem richtigen Rotorblatt zugeordnet werden können.

Dieses Identifizieren kann so ausgestaltet sein, dass zu der betreffenden Montageposition das Rotorblatt, das dort montiert ist oder montiert werde soll, über eine Eingabeschnittstelle zusammen mit Eigenschaften des Rotorblatts eingegeben werden kann. Eine solche Eingabe, für die eine Eingabemaske vorgesehen sein kann, wird dann der entsprechenden Montageposition zugeordnet.

Der Rotor ist üblicherweise so aufgebaut, dass er eine Rotornabe aufweist, an der die Rotorblätter befestigt, nämlich montiert sind. Eine solche Nabe für drei Rotorblätter weist entsprechend drei Aufnahmeflansche zum Aufnehmen jeweils eines Rotorblatts auf. Diese entsprechenden drei Aufnahmeflansche sind alle drei üblicherweise identisch. Für die individuelle Bewertung der Rotorblätter müssen diese genannten Flansche, die als Montageposition angesehen werden können, voneinander unterschieden werden können. Eine Möglichkeit dazu besteht darin, dass ein Drehsensor, der die Drehung des Rotors erfasst, und damit die Drehung der Nabe erfasst, eine absolute Position des Rotors bzw. der Nabe identifizieren kann. Dazu kann bspw. ein entsprechender Referenzstrich oder anderer Referenzindikator vorgesehen sein. Darüber können die einzelnen Montagepositionen identifiziert werden und darüber die jeweils montierten Rotorblätter.

Optional ist vorgesehen, dass ermittelte individuelle Blattleistungsvermögen, insbesondere ermittelte individuelle Blattleistungen dem identifizierten Rotorblatt zugeordnet werden können. Dafür können entsprechende Datensätze oder Speicherstrukturen vorgesehen sein. Besonders kann eine solche Zuordnung durch ein entsprechendes Steuerprogramm realisiert werden, das auf der Steuereinrichtung implementiert sein kann. Die Windenergieanlage bzw. Steuereinrichtung kann somit dadurch dazu vorbereitet sein, eine solche Zuordnung vorzunehmen. Dazu können bspw. die eingegebenen Eigenschaften des montierten Rotorblattes der Montageposition zugeordnet werden. Werden im Laufe der Untersuchung bzw. Bewertung weitere Eigenschaften herausgefunden, insbesondere individuelle Blattleistungsvermögen bzw. individuelle Blattleistungen, so können diese dem Datensatz ergänzt werden, der der entsprechenden Montageposition und damit dem individuellen Rotorblatt zugeordnet ist.

Die Erfindung wird nachfolgend anhand von Ausführungsbeispielen unter Bezugnahme auf Figuren beispielhaft näher erläutert.
- **Figur 1**: zeigt eine Windenergieanlage in einer perspektivischen Darstellung.
- **Figur 2**: zeigt schematisch eine Windenergieanlage mit angedeuteten Schwenk- und Schlaglastsensoren zur Bestimmung einer individuellen Blattleistung.
- **Figur** 3: zeigt drei individuelle Blattleistungsverläufe in einem Zeitdiagramm und in einem Rotorpositionsdiagramm.
- **Figur** 4: zeigt ein Ablaufschema für die Optimierung von Blattwinkeln bei gleichen Rotorblättern.
- **Figur** 5: zeigt ein Diagramm zur Vermessung und/oder Validierung unterschiedlicher Rotorblätter.

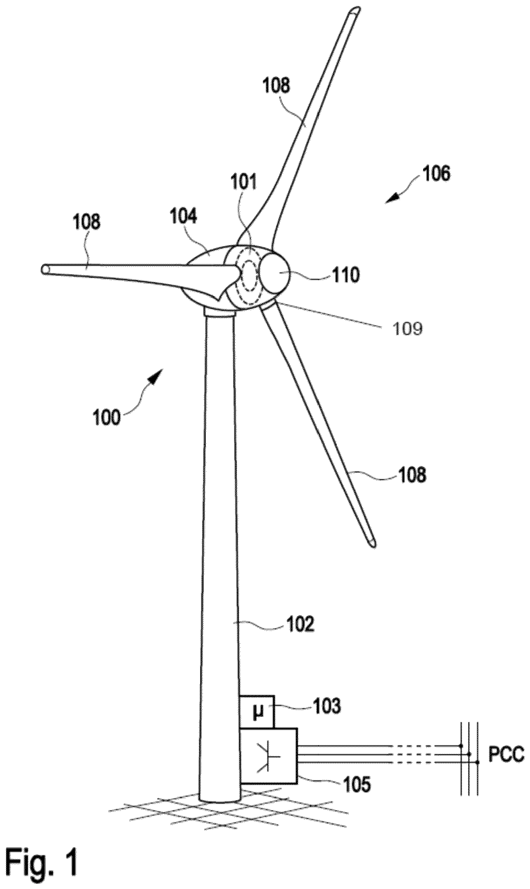

**Figur 1** zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

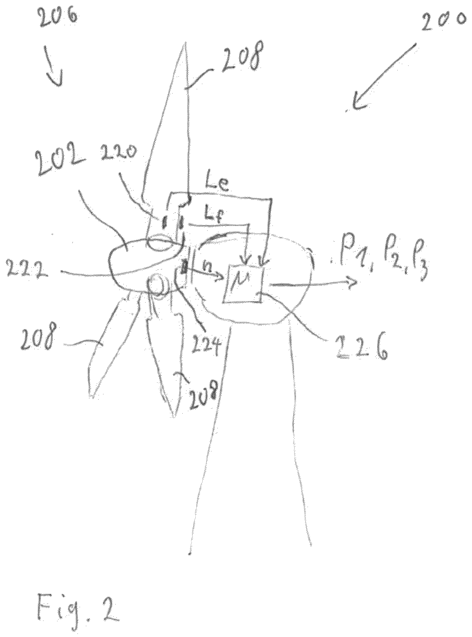

**Figur 2** zeigt schematisch eine Windenergieanlage 200 mit einem Rotor 206 mit drei Rotorblättern 208, die an einer Rotornabe 202 montiert sind. Besonders die Rotorblätter 208 sind schematisch dargestellt und sollen eine beispielhafte Position von 0° aufweisen, also eine Betriebsposition, die besonders im Teillastbetrieb eingenommen werden würde. Exemplarisch ist an einem der drei Rotorblätter 208 ein Schwenklastsensor 220 und ein Schlaglastsensor 222 gezeigt. Ebenfalls ist ein Drehsensor 224 angedeutet, der eine Drehzahl n des Rotors 206 erfassen kann.

Der Schwenklastsensor 220 erfasst eine Schwenklast Lₑ und der Schlaglastsensor 222 erfasst eine Schlaglast Lf. Die Schwenklast Lₑ und die Schlaglast Lf werden zusammen mit der Rotordrehzahl n in eine Steuereinrichtung 226 der Windenergieanlage 200 eingegeben. Die Steuereinrichtung 226 kann daraus eine individuelle Blattleistung P₁ für dieses eine Rotorblatt 208 bestimmen. In gleicher Art und Weise kann entsprechend auch eine individuelle Blattleistung P₂ und P₃ für ein zweites bzw. drittes Rotorblatt 208 bestimmt werden, wenn von dem jeweiligen Rotorblatt ebenfalls die Schwenklast Lₑ und die Schlaglast Lf aufgenommen und berücksichtigt werden. Es ist aber auch möglich, nur mit der Schwenklast Lₑ oder nur mit der Schlaglast Lf auszukommen und zusammen mit der Rotordrehzahl n die entsprechenden individuellen Blattleistungen zu bestimmen.

Insoweit bezeichnet die Schwenklast Lₑ eine Last, die in Schwenkrichtung, also in Drehrichtung des Rotors 206 gerichtet ist und entsprechend auch zum Antreiben des Rotors in seiner Drehrichtung geeignet ist. Die Schlaglast Lf ist eine Last, die im Grunde das jeweilige Rotorblatt zur Windenergieanlage hin drückt. Eine solche Schlaglast Lf kann in der in Figur 2 angedeuteten Situation kaum zur Drehung des Rotors 206 beitragen und daher auch kaum Aufschluss über die jeweilige individuelle Blattleistung des Rotorblatts geben. Über eine Leistungsfähigkeit des Rotorblatts kann sie dennoch Aufschluss geben, bspw. über einen Verschmutzungsgrad oder auf den Einfluss eines Anbauteils, je nachdem, wo genau dieses Anbauteil angeordnet ist. Insoweit wurde erkannt, dass schon deswegen die Berücksichtigung der Schlaglast Lf hilfreich sein kann, so dass ihre Berücksichtigung vorgeschlagen wird.

Sobald aber das betreffende Rotorblatt in seinem Blattwinkel verändert wird, kann auch die durch den Schlaglastsensor 222 aufgenommene Schlaglast Lf zur Drehung des Rotors beitragen und damit auch zur individuellen Blattleistung des jeweiligen Rotorblatts beitragen. Dann kann auch aus der Schlaglast Lf eine individuelle Blattleistung abgelesen oder abgeleitet werden.

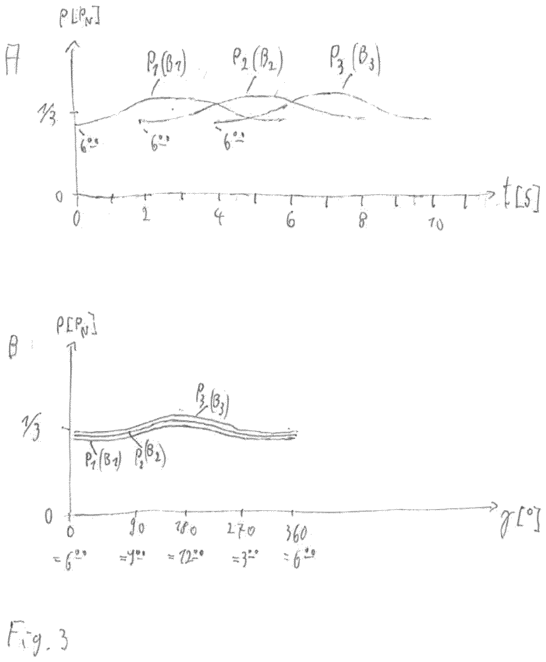

**Figur 3** zeigt ein Diagramm A und ein Diagramm B. In beiden Diagrammen ist ein Verlauf einer individuellen Blattleistung jeweils für ein Rotorblatt B₁, B₂ und B₃ dargestellt. Vereinfachend und veranschaulichend ist hier eine Situation zugrunde gelegt, bei der die Windenergieanlage etwa Nennleistung P_{N} erzeugt. Jedes Rotorblatt erzeugt somit etwa ein Drittel Nennleistung. Insoweit sind die Ordinaten der beiden Diagramme A und B gleich.

Im Diagramm A sind die drei individuellen Blattleistungsverläufe P₁, P₂ und P₃ jeweils für das betreffende Rotorblatt B₁, B₂ und B₃ über die Zeit dargestellt. Vereinfachend ist hier von einer Windenergieanlage ausgegangen, die in der gezeigten Situation eine Rotordrehzahl von 10 U/min aufweist, so dass sich der Rotor in 6 Sekunden (6 s) einmal vollständig dreht. Eine solche Drehzahl kann für kleine und mittlere Windenergieanlagen angenommen werden. Größere Windenergieanlagen würden sich eher noch etwas langsamer drehen, worauf es bei der schematischen Darstellung aber nicht ankommt.

Zum Zeitpunkt t = 0 s ist das Rotorblatt B1 bzw. der Rotor bezogen auf das Rotorblatt B1 in einer 6-Uhr-Stellung, was in dem Diagramm A angedeutet ist. Dass der Rotor bezogen auf ein bestimmtes Rotorblatt in einer bestimmten Stellung, wie der 6-Uhr-Stellung ist, wird hier vereinfachend so bezeichnet, dass das bestimmte Rotorblatt in der bestimmten Stellung wie der 6-Uhr-Stellung ist. Jedenfalls wird angenommen, dass auch hier eine Situation zugrunde liegt, bei der die Windgeschwindigkeit in einem unteren Bereich des Rotorfeldes bzw. der Rotorfläche geringer als in dem oberen Bereich ist. Daraus ergeben sich die Leistungsschwankungen. Eine Abschattung durch den Turm ist hier nicht berücksichtigt.

Entsprechend weist der Verlauf der individuellen Blattleistung P₁ zum Zeitpunkt t = 0 s einen minimalen Wert auf, der nach 3 s auf einen maximalen Wert steigt, wenn das Rotorblatt in einer 12-Uhr-Stellung ist.

Entsprechend sind die Verläufe der individuellen Blattleistung für das zweite und dritte Rotorblatt B₂ und B₃ jeweils um 2 bzw. 4 Sekunden gegenüber dem Verlauf des ersten Rotorblatts B₁ verschoben. Das zweite Rotorblatt B₂ ist also nach 2 Sekunden in einer 6-Uhr-Stellung und das dritte Rotorblatt B₃ nach 4 Sekunden.

Wie in Diagramm A zu erkennen ist, können die drei Leistungsverläufe in der dort gewählten Darstellung nicht sehr gut miteinander verglichen werden. Entsprechend wird gemäß Diagramm B eine Darstellung gewählt, bei der die Leistungsverläufe P₁ bis P₃ in Abhängigkeit von der Rotorposition, also dem Rotordrehwinkel γ dargestellt sind. Dadurch sind die drei Verläufe in Phase und können ohne Weiteres verglichen werden. Das soll in Figur 3B veranschaulicht werden, die somit den Verlauf der individuellen Blattleistung für jedes der Rotorblätter über eine Umdrehung darstellt, beginnend mit der 6-Uhr-Position, die dort als 0° eingezeichnet ist.

Natürlich braucht für einen solchen Leistungsvergleich nicht unbedingt ein Diagramm gewählt zu werden. Stattdessen kann auch eine Differenzbildung zwischen den erfassten Verläufen der individuellen Blattleistung für jede bzw. viele Rotorpositionen durchgeführt werden.

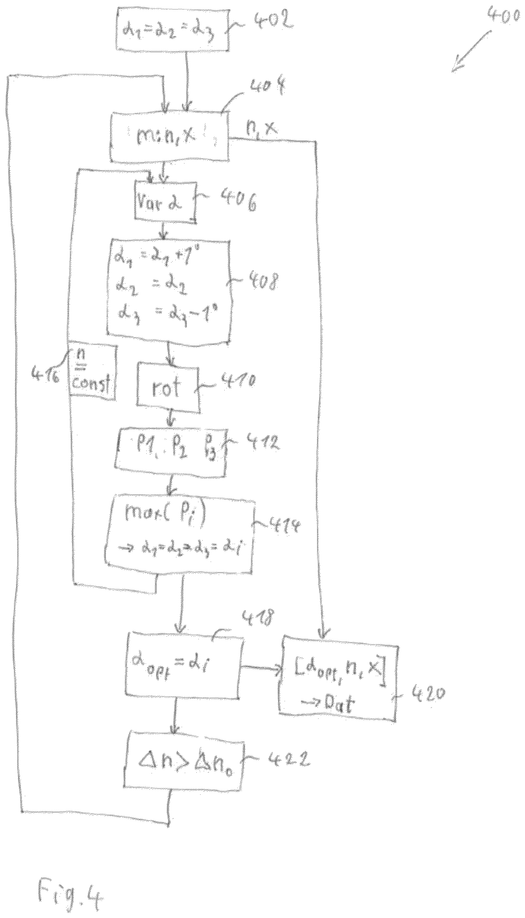

**Figur 4** zeigt ein Ablaufdiagramm 400, mit dem optimale Blattwinkel gefunden werden sollen. Dafür weist die Windenergieanlage drei gleiche Rotorblätter auf, und die weisen grundsätzlich im Betrieb und auch zu Beginn des Optimierungsablaufs die gleichen Blattwinkel α₁ = α₂ = α₃ auf, was der Startschritt 402 andeutet.

In dem Messschritt 404 werden Randbedingungen erfasst. Besonders die Drehzahl wird erfasst und es können diverse weitere Randbedingungen erfasst werden, für die repräsentativ das Zeichen x steht. Die weiteren Bedingungen können bspw. Luftdichte, Luftfeuchte, Luftdruck, Temperatur oder auch eine Böigkeit oder Böenintensität sein.

In dem Variationsschritt 406 wird dann eine Variation der Blattwinkel durchgeführt. In dem Variationsschritt 406 können dafür beispielsweise Kriterien zugrunde gelegt werden, wie bspw. eine geringere Variation der Blattwinkel als in einem früheren Durchlauf vorzunehmen.

Jedenfalls erfolgt dann eine entsprechende Einstellung der Blattwinkel α₁, α₂ und α₃ in dem Verstellschritt 408. In Figur 4 ist dazu in dem Verstellschritt 408 exemplarisch angedeutet, dass der Blattwinkel α₁ um einen Grad (1°) erhöht wird, der Blattwinkel α₂ unverändert bleibt und der Blattwinkel α₃ um einen Grad (1°) verringert wird, aber in negative Richtung. Dies dient aber nur der Illustration und es können andere Werte verwendet werden. Dabei müssen die Blattwinkel α₁ und α₃ auch nicht um denselben Wert nur mit anderem Vorzeichen verändert werden. Es kommt auch in Betracht, dass der Blattwinkel α₂ ebenfalls verändert wird.

Den Blattwinkel α₂ nicht zu verändern ist allerdings eine bevorzugte Variante, bei der der Blattwinkel α₂ dann als Referenzblattwinkel dienen kann bzw. das zugehörige Rotorblatt als Referenzrotorblatt. Mithilfe eines solchen unveränderten Referenzrotorblatts kann eine entsprechende Referenz geschaffen werden und dadurch kann erkannt werden, ob sich die Windgeschwindigkeit etwas verändert hat. Mit anderen Worten kann an dem im Blattwinkel unveränderten Referenzrotorblatt erkannt werden, ob sich die individuelle Blattleistung verändert hat, ohne dass der Blattwinkel verändert wurde.

Mit den so eingestellten Blattwinkeln erfolgt dann im Betriebsschritt 410 ein Betrieb der Windenergieanlage. Die Windenergieanlage wird also mit den im Verstellschritt 408 eingestellten Blattwinkeln betrieben. Das bedeutet natürlich nicht, dass sie für das Verstellen der Blattwinkel angehalten werden muss, sondern sie kann vielmehr normal weiterbetrieben werden, während in einem solchen Betrieb die Blattwinkel verstellt werden. Insoweit deutet der Betriebsschritt 410 an, dass die Windenergieanlage mit den neu eingestellten Blattwinkeln für einen gewissen Moment, insbesondere wenigstens für eine Umdrehung des Rotors, betrieben wird.

Dann wird im Erfassungsschritt 412 eine individuelle Blattleistung P₁, P₂ und P₃ für die entsprechenden drei Rotorblätter ermittelt. Dafür können entsprechende Blattlasten ermittelt werden, was hier in Figur 4 nicht erwähnt ist. Die Erfassung kann so erfolgen, wie im Zusammenhang mit Figur 2 erläutert wurde, und die Auswertung, besonders ein Vergleich, kann so erfolgen, wie im Zusammenhang mit Figur 3 erläutert wurde.

Im Optimierungsschritt 414 wird dann geprüft, welche der drei individuellen Blattleistungen die größte war. Daraufhin, also davon abhängig, wird für alle drei Rotorblätter der Blattwinkel gewählt, bei dem die individuelle Blattleistung am größten war.

Der Ablauf verzweigt dann zurück zum Variationsschritt 406, wobei im Prüfschritt 416 geprüft wird, ob die Drehzahl weiterhin konstant ist. Solange nämlich die Drehzahl weiterhin konstant ist, wird auch von unveränderter Windgeschwindigkeit ausgegangen, und dann kann der Vorgang wiederholt werden, um möglicherweise einen noch besseren Blattwinkel zu finden. Entsprechend wird dann der Ablauf gemäß den Schritten 406 bis 414 wiederholt.

Besonders wird im Variationsschritt 406 eine andere Variation als vorher durchgeführt. Insbesondere kommt in Betracht, in Abhängigkeit von dem Ergebnis des Optimierungsschritts 414 eine erfolgsversprechende Änderungsrichtung zu erkennen und entsprechend die Blattwinkel zu variieren. Es kommt aber auch in Betracht, dieselbe Variation wie in dem Durchlauf zuvor einzustellen. Das kann besonders dann vorgesehen sein, wenn sich im Optimierungsschritt 414 herausgestellt hat, dass der Referenzblattwinkel der beste war, also keine Variation durchgeführt wurde. Dann kann zur Überprüfung dieselbe Variation durchgeführt werden. Es kann aber auch eine Variation mit geringeren Veränderungen durchgeführt werden, also bspw. statt einer Erhöhung und Verringerung um jeweils einen Grad (1°) in einem ersten Durchlauf eine Erhöhung bzw. Verringerung um jeweils einen halben Grad (0,5°) im zweiten Durchlauf durchzuführen.

Nach mehreren Durchläufen, besonders wenn die individuellen Blattleistungen sich trotz Variation des Blattwinkels nicht mehr erhöhen, kann davon ausgegangen werden, dass der optimale Blattwinkel gefunden wurde. Entsprechend wird dann der optimale Blattwinkel αₒₚₜ auf den zuletzt als optimal gefundenen Blattwinkel αᵢ in dem Ergebnisschritt 418 gesetzt.

Der so gefundene optimale Blattwinkel kann in einem Speicherschritt 420 zusammen mit Randbedingungen abgespeichert werden. Diese Randbedingungen beinhalten insbesondere die Rotordrehzahl n und eine oder weitere Randbedingungen x, wobei x repräsentativ für diverse Randbedingungen stehen kann, wie oben erläutert wurde.

In einem Überprüfungsschritt 422 wird überprüft, ob sich die Drehzahl signifikant geändert hat, was in dem zugehörigen Block angedeutet ist. Hierzu kann geprüft werden, ob eine Drehzahlabweichung Δn größer als eine Mindestabweichung Δn₀ ist. Diese Drehzahlabweichung Δn kann sich sowohl auf eine Drehzahlerhöhung als auch auf eine Drehzahlverringerung beziehen.

Hat sich die Drehzahl also signifikant verändert, so verzweigt der Ablauf zum Messschritt 404, in dem dann entsprechend die neuen Randbedingungen erfasst werden. Insbesondere wird die neue Drehzahl n erfasst, aber auch weitere Randbedingungen, für die das Zeichen x repräsentativ steht, können erfasst werden.

Entsprechend kann dann die beschriebene Optimierung gemäß den Blöcken 406 bis 416 für neue Randbedingungen durchgeführt werden, um dann gemäß Ergebnisschritt 418 zu einem Ergebnis zu kommen, das wieder gemäß dem Speicherschritt 420 abgespeichert werden kann. Entsprechend gibt es dann einen weiteren Eintrag für einen optimalen Blattwinkel αₒₚₜ für andere Randbedingungen, insbesondere eine andere Drehzahl. Auf diese Art und Weise kann eine Datenbank aufgebaut werden, aus der abhängig der Randbedingung, insbesondere in Abhängigkeit von der jeweiligen Rotordrehzahl, der optimale Blattwinkel αₒₚₜ ausgelesen und für alle drei Rotorblätter eingestellt werden kann.

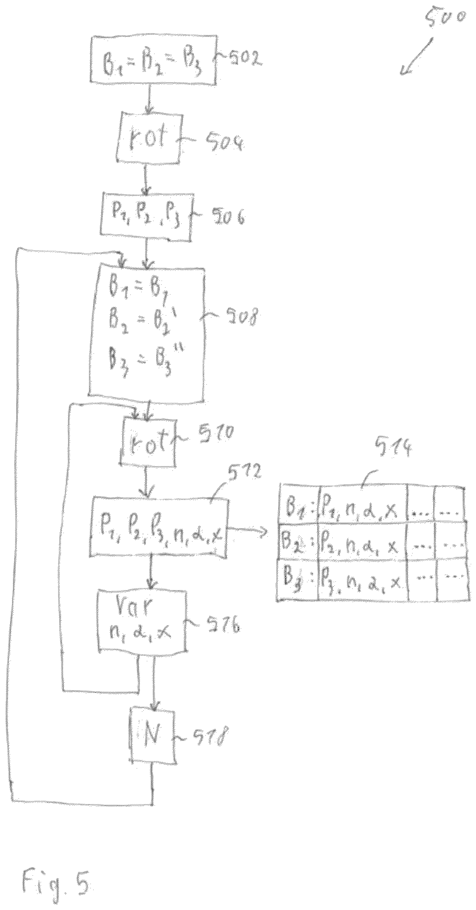

**Figur 5** zeigt einen Validierungsablauf 500. Dieser Validierungsablauf ist vorgesehen, um wenigstens ein Rotorblatt zu validieren, also im Feld zu testen und zu bestätigen, inwieweit in Simulationen durchgeführte Untersuchungen auch im realen Einsatz des Rotorblattes auftreten.

In einem Anfangsschritt 502 weist die Windenergieanlage zunächst drei gleiche Rotorblätter B₁ = B₂ = B₃ auf. Mit dieser Konstellation kann die Windenergieanlage in einem ersten Betriebsschritt 504 betrieben werden und es können in einem ersten Erfassungsschritt 506 die individuellen Blattleistungen P₁, P₂ und P₃ aufgenommen werden. Dies kann dazu dienen, Referenzwerte aufzunehmen. Diese drei Schritte 502 bis 506 können allerdings entbehrlich sein, besonders dann, wenn bei der weiteren Validierung nicht alle drei Rotorblätter getauscht werden.

Gemäß dem Variationsschritt 508 werden dann ein Rotorblatt, zwei Rotorblätter oder alle Rotorblätter variiert. Figur 5 veranschaulicht den Fall, dass nur das zweie Rotorblatt B₂ und das dritte Rotorblatt B₃ variiert werden, nämlich in das zweite variierte Rotorblatt B₂^{'} und das dritte variierte Rotorblatt B₃^{"}. Die Variation kann ein Austausch des betreffenden Rotorblatts gegen ein anderes sein, oder das Vorsehen von Anbauteilen. Bspw. können gemäß dem genannten Beispiel an die beiden Rotorblätter B₂ und B₃ Anbauteile angebaut werden, die sich der Art nach und/oder der Position nach, in der sie angeordnet werden, und/oder ihrer Anzahl nach unterscheiden.

Dann folgt ein zweiter Betriebsschritt 510, in der die Windenergieanlage mit dieser neuen Konfiguration betrieben wird.

Im zweiten Erfassungsschritt 512 werden die individuellen Blattleistungen P₁, P₂ und P₃ erfasst, sowie Randbedingungen dazu. Insbesondere die Drehzahl n und der Blattwinkel α werden erfasst. Bei der hier gemäß dem Validierungsablauf 500 vorgesehenen Validierung wird vorzugsweise der gleiche Blattwinkel für alle drei Rotorblätter verwendet. Es können weitere Bedingungen berücksichtigt werden, für die auch hier das Zeichen x repräsentativ steht. All diese Werte können dann in einem Speicherschritt 514 abgespeichert werden. Hier ist es besonders vorgesehen, dass zu jedem Rotorblatt B₁, B₂ und B₃ Einträge gespeichert werden, nämlich die für das jeweilige Rotorblatt ermittelte individuelle Blattleistung P₁, P₂ bzw. P₃ und dazu die zugehörige Drehzahl n, der zugehörige Blattwinkel α und gegebenenfalls weitere Randbedingungen x.

In dem Prüfschritt 516 wird geprüft, ob sich Randbedingungen verändert haben, insbesondere kann eine geänderte Rotordrehzahl n auftreten. Es kommt aber auch in Betracht, dass hier zur Validierung aktiv eine Veränderung vorgenommen wird, bspw. der Rotorblattwinkel α verändert wird. Auch andere Bedingungen können sich ändern oder geändert werden, wofür das Zeichen x repräsentativ steht. Eine gezielte Änderung kann auch dadurch erreicht werden, dass eine Generatorleistung verändert wird. Dies kann, wenn ansonsten keine Änderungen vorgenommen werden, zu einer Veränderung der Drehzahl n führen. Die Drehzahl n kann sich also durch Änderung der Windgeschwindigkeit von alleine ändern, oder gezielt durch Änderung der Generatorleistung bzw. des Generatormomentes geändert werden.

Jedenfalls kann in dem Fall für neue Randbedingungen die Validierung gemäß den Schritten 510 und 512 wiederholt werden. Finden sich dadurch neue individuelle Blattleistungen, können diese zusammen mit den Randbedingungen gemäß dem Speicherschritt 514 abgespeichert werden, nämlich als weiterer Eintrag. Dadurch werden möglichst viele Werte aufgenommen, um dadurch das Rotorblatt möglichst umfassend zu untersuchen und entsprechend zu validieren.

Der Speicherschritt 514 kann anfangs auch beinhalten, grundlegende Daten des betreffenden Rotorblatts abzuspeichern. Dazu gehört eine klare Identifikation des Rotorblatts als solches und auch Informationen dazu, welche Anbauteile wo am Rotorblatt angeordnet sind, oder ob keine Anbauteile vorhanden sind. Ein solcher Datensatz zum Identifizieren des Rotorblatts kann aber auch vor Inbetriebnahme der Validierungsschritte schon abgespeichert sein. Dann würde im Speicherschritt 514 jeweils das Ergebnis gemäß dem Erfassungsschritt 512 zu dem jeweils identifizierten Rotorblatt abgespeichert werden.

Im Prüfschritt 516 kann aber auch festgestellt werden, dass sich die Randbedingungen nicht geändert haben, und dann kann trotzdem eine Wiederholung der Schritte 510 und 512 und gegebenenfalls 514 durchgeführt werden, um dadurch das vorige Ergebnis, das bei gleichen Randbedingungen erzielt wurde, zu überprüfen.

Besonders dann, wenn nun die veränderten Rotorblätter, oder das eine veränderte Rotorblatt, in ausreichenden Konstellationen vermessen und validiert wurde, kommt eine Neuvalidierung weiterer Rotorblätter oder anderweitig veränderter Rotorblätter in Betracht. Das kann durch einen Neuvalidierungsschritt 518 initiiert werden. In dem Fall erfolgt also eine Veränderung der Rotorblätter gemäß dem Variationsschritt 508. Mit den so veränderten Rotorblättern, oder nur einem veränderten Rotorblatt, kann dann die Vermessung bzw. Validierung besonders gemäß den Schritten 510 und 512 durchgeführt werden. Beim Speicherschritt 514 wird dann natürlich ein neuer Eintrag für ein neues Rotorblatt begonnen, also bspw. für ein Rotorblatt B₄ oder B₅ usw..

Erfindungsgemäß wurde auch das Nachfolgende erkannt und berücksichtigt.

Für Rotorblätter gibt es unterschiedliche Arten von "Add-Ons", welche die Strömungszustände am Rotorblatt verbessern sollen (Vortex-Generatoren, Trailing Edge Serrations, Gurney Flaps, etc.).

Messungen aus einem Windkanal und Ergebnisse aus einer Simulation versprechen für die einzelnen Maßnahmen oftmals eine Verbesserung der Leistungskurve. Die Gewinne in der Performance sind in der Regel im Bereich 0.2-0.5% der jährlichen Energieproduktion (AEP). Diese Größenordnungen sind in der Leistungskurvenvermessung jedoch nicht zu validieren, da die saisonalen Schwankungen in der Leistungskurve (LK) sich auf 1-2% der AEP belaufen können. Diese saisonalen Schwankungen fallen ins Gewicht, wenn in einem ersten Zeitraum 2-3 Monate ohne "Add Ons" am Rotorblatt und in einem zweiten Zeitraum mit "Add Ons" am Rotorblatt die Leistungskurve bestimmt wird. Die jeweilige aus den LKs gebildete resultierende AEP ist zu stark von den saisonalen Schwankungen der LK beeinflusst, die Auswirkung der "Add-Ons" auf die AEP kann nur schwer beziffert werden.

Somit hat sich die Frage gestellt, wie die Ergebnisse aus dem Windkanal und der Simulation validiert werden können? Vorteilhaft wäre eine Validierung der "Add-Ons", um sich für oder gegen diese Maßnahme entscheiden zu können. Jedes "Add-On" führt zu einer Preissteigerung des Rotorblattes und macht dieses ggf. wartungsintensiver. Hilfreich wäre eine Validierungsmethode, um weitere Indikationen zur Wirkweise der Rotorblätter "Add-Ons" zu bekommen.

In der Vergangenheit wurde die Auswirkung von "Add-Ons" auf die Leistungskurve bereits häufiger validiert. Hierbei wurde als erstes eine Leistungskurve an einer Windenergieanlage (WEA) vermessen, was 2-3 Monate dauern kann, und daraufhin wurden die "Add-Ons" am Rotorblatt installiert und erneut die Leistungskurve vermessen. Aufgrund der saisonalen Unterschiede in der Leistungskurve konnten nur sehr schwer Schlüsse aus der Performance der "Add-Ons" gezogen werden.

Eine vorgeschlagene Validierungsprozedur kann wie folgt ausgestaltet sein.

### Periode 1: Messung ohne "Add-Ons" (Kalibrierung)

Zur Validierung der Add-Ons am Rotorblatt (RB-Add-Ons) werden die Lasten an allen drei Rotorblättern der Test-WEA, jedes Rotorblatt ohne "Add-Ons", über einen statistisch ausreichenden Zeitraum ermittelt. Hierbei geht es um alle oder möglichst viele Lastgrößen, welche durch den Auftrieb an den Rotorblättern beeinflusst werden (z.B. Dehnungen, Biegungen, Momente, Auslenkungen etc.).

### Periode 2: Messung mit installierten "Add-Ons" an einem Rotorblatt

An einem der Rotorblätter werden die "Add-Ons" installiert. Jetzt gilt es wieder in einem statistisch ausreichenden Zeitraum die Lasten der drei Rotorblätter zu messen. Die zwei Rotorblätter ohne "Add-Ons" gelten als Referenz für das Rotorblatt mit "Add-Ons".

### Periode 3: Validierung

Der erste Zeitraum ermöglicht eine Kalibrierung des Messsystems. Unterschiede in den Lastmessungen aufgrund der Messtechnik und der ggf. differenzierenden Rotorblattperformance (Blattwinkelfehler, Produktionsgenauigkeit, Rotorblatt-Beschaffenheit, etc.), werden bereinigt.

Die Kalibrierung wird auf die Daten der Messung mit dem einzelnen ausgestatteten Rotorblatt angewendet. Durch die Lastveränderung aufgrund der "Add-Ons" an dem Rotorblatt wird die Validierung der Wirkweise der "Add-Ons" ermöglicht. Die Änderung der Strömung am Rotorblatt führt zu einem veränderten Lastverhalten des Rotorblattes im Vergleich zu den beiden nicht ausgestatteten Rotorblättern, welche als Referenz betrachtet werden. Aufgrund der Lastveränderung werden Rückschlüsse auf die Performance der "Add-Ons" getätigt.

Ein Vorteil der Erfindung kann auch darin bestehen, dass die Auswirkungen von Rotorblatt "Add-Ons" auf den Auftrieb/Lasten erfasst und dargestellt werden können.

### Bezugszeichenliste

| | | | |
|---|---|---|---|
| 200 | Windenergieanlage | Δn | Drehzahlabweichung |
| 202 | Nabe | Δn₀ | Mindestabweichung |
| 206 | Rotor | B₁,B₂,B₃,.... | Rotorblätter |
| 208 | Rotorblätter | P₁,P₂,P₃,.... | individuelle Blattleistung |
| 220 | Schwenklastsensor Lₑ | x | Randbedingung/en |
| 222 | Schlaglastsensor Lf | α / α₁, α₂, α₃ | Blattwinkel |
| 224 | Drehsensor | αₒₚₜ | optimale Blattwinkel |
| 226 | Steuereinrichtung | γ | Rotordrehwinkel |
| 400 | Ablaufdiagramm | 500 | Validierungsablauf |
| 402 | Startschritt | 502 | Anfangsschritt |
| 404 | Messschritt | 504 | erster Betriebsschritt |
| 406 | Variationsschritt | 506 | erster Erfassungsschritt |
| 408 | Verstellschritt | 508 | Variationsschritt |
| 410 | Betriebsschritt | 510 | Zweiter Betriebsschritt |
| 412 | Erfassungsschritt | 512 | Zweiter Erfassungsschritt |
| 414 | Optimierungsschritt | 514 | Speicherschritt |
| 416 | Prüfschritt | 516 | Prüfschritt |
| 418 | Ergebnisschritt | 518 | Neuvalidierungsschritt |
| 420 | Speicherschritt | | |
| 422 | Überprüfungsschritt | | |

## Patentansprüche

1. Verfahren zum Validieren einer Windenergieanlage oder einer Komponente der Windenergieanlage, wobei die Windenergieanlage einen aerodynamischen Rotor mit mehreren, eine Rotorfläche überstreichenden Rotorblättern aufweist, wobei
- jedes Rotorblatt eine Blattwurzel mit einem Blattwurzelbereich aufweist und in seinem Blattwinkel verstellbar ist; und
- für wenigstens eines der Rotorblätter jeweils aus erfassten Betriebsdaten der Windenergieanlage ein individuelles Blattleistungsvermögen, und/oder eine individuelle Blattleistung ermittelt wird, wobei
- das individuelle Blattleistungsvermögen ein Vermögen eines Rotorblattes beschreibt, Leistung aus Wind in eine Teildrehleistung zum Drehen des Rotors umzuwandeln, und die individuelle Blattleistung eine Leistung der Höhe nach bezeichnet, die das jeweilige Rotorblatt aus dem Wind in eine Teildrehleistung zum Drehen des Rotors umwandelt, sodass eine Summe der individuellen Blattleistungen aller Rotorblätter des Rotors eine gesamte Drehleistung des Rotors ergibt.

2. Verfahren nach Anspruch 1, **dadurch gekennzeichnet, dass**
- die individuelle Blattleistung in Abhängigkeit von einer Lastauswertung des jeweiligen Rotorblattes ermittelt wird und/oder, dass
- die individuelle Blattleistung in Abhängigkeit von einer erfassten Blattlast, insbesondere einer erfassten Schwenklast des jeweiligen Rotorblattes ermittelt wird, insbesondere an der Blattwurzel oder im Blattwurzelbereich des jeweiligen Rotorblattes.

3. Verfahren nach Anspruch 1 oder 2, **dadurch gekennzeichnet, dass**
- über wenigstens eine Rotordrehung ein zeitlicher Leistungsverlauf von der Windenergieanlage erzeugter Leistung erfasst wird,
- Leistungswerte des Leistungsverlaufs jeweils einer Rotorposition zugeordnet werden und
- aus den zugeordneten Leistungswerten die wenigstens eine individuelle Blattleistung ermittelt wird, wobei insbesondere
- die wenigstens eine individuelle Blattleistung unter weiterer Berücksichtigung einer über die Rotorfläche variierenden Windgeschwindigkeit ermittelt wird.

4. Verfahren nach einem der vorstehenden Ansprüche, **dadurch gekennzeichnet, dass**
- das Ermitteln der individuellen Blattleistung
- für mehrere Umdrehungen des Rotors wiederholt wird, und/oder
- mit variierenden Blattwinkeln wiederholt wird, und/oder
- mit unterschiedlichen Rotordrehzahlen wiederholt wird, und/oder
- unter Berücksichtigung von Umgebungsbedingungen, insbesondere Wetterbedingungen, wiederholt wird und/oder, dass
- ein Wiederholzyklus des Ermittelns der individuellen Blattleistung durch Erkennen
- eines geänderten Blattwinkels, und/oder
- einer veränderten Rotordrehzahl und/oder
- wenigstens einer geänderten Umgebungsbedingung, insbesondere Wetterbedingung, eingeleitet wird.

5. Verfahren nach einem der vorstehenden Ansprüche, **dadurch gekennzeichnet, dass**
- zum Ermitteln der individuellen Blattleistung eines Rotorblattes
- eine Lastgröße des Rotorblattes, insbesondere im Bereich einer Blattwurzel des Rotorblatts, aufgenommen wird,
- unter Berücksichtigung des Blattwinkels eine Schwenklast bestimmt wird und
- in Abhängigkeit von der so bestimmten Schwenklast die individuelle Blattleistung des Rotorblattes ermittelt wird.

6. Verfahren nach einem der vorstehenden Ansprüche, **dadurch gekennzeichnet, dass**
- zum Bewerten von Blattkonfigurationen die Windenergieanlage mit unterschiedlich konfigurierten Rotorblättern in einem Prüfbetrieb betrieben wird und
- in dem Prüfbetrieb von einem oder mehreren der unterschiedlich konfigurierten Rotorblättern jeweils eine Last als Prüflast aufgenommen wird, und
- die wenigstens eine Prüflast mit wenigstens einer weiteren Prüflast und/oder mit einer Referenzlast verglichen wird und
- abhängig von dem Vergleich das Leistungsvermögen des wenigstens einen Rotorblattes bewertet wird.

7. Verfahren nach einem der vorstehenden Ansprüche, **dadurch gekennzeichnet, dass**
- zur Erfassung oder Bestimmung des aus einer Blattveränderung eines der Rotorblätter resultierenden veränderten Blattleistungsvermögens
- in einem ersten Schritt die Windenergieanlage ohne die Blattveränderung in einem Referenzbetrieb betrieben wird, insbesondere mit gleichen Rotorblättern,
- während des Referenzbetriebs Lasten der Rotorblätter als Referenzlasten aufgenommen werden,
- in einem zweiten Schritt die Windenergieanlage mit der Blattveränderung in einem Prüfbetrieb betrieben wird, wobei die Blattveränderung nur für eines der Rotorblätter vorgenommen wird,
- in dem Prüfbetrieb Lasten der Rotorblätter als Prüflasten aufgenommen werden, und
- in Abhängigkeit von den aufgenommenen Referenzlasten und den aufgenommenen Prüflasten eine veränderte individuelle Blattleistung ermittelt wird und
- in Abhängigkeit von der veränderten individuellen Blattleistung das veränderte Blattleistungsvermögen ermittelt wird.

8. Verfahren nach einem der vorstehenden Ansprüche, **dadurch gekennzeichnet, dass**
- zur Blattveränderung nur für eines der Rotorblätter Anbauteile ergänzt, entfernt und/oder verändert werden, oder für mehrere Rotorblätter unterschiedliche Anbauteile ergänzt, entfernt und/oder verändert werden, und
- in Abhängigkeit des ermittelten, veränderten Leistungsvermögens und/oder veränderten individuellen Blattleistung eine Validierung für das veränderte Rotorblatt durchgeführt wird und/oder, dass
- in Abhängigkeit von den ermittelten individuellen Blattleistungen eine Leistungsüberwachung durchgeführt wird, wobei insbesondere
- die ermittelten individuellen Blattleistungen als Blattleistungsverläufe aufgenommen werden, und
- zur Leistungsüberwachung die Blattleistungsverläufe der Rotorblätter verglichen werden.

9. Verfahren nach einem der vorstehenden Ansprüche, **dadurch gekennzeichnet, dass**
- Blattleistungsverläufe bzw. die Blattleistungsverläufe als Verläufe der individuellen Blattleistung über wenigstens eine Rotordrehung aufgenommen werden und
- die Blattleistungsverläufe in Bezug auf eine umlaufende Rotorposition des jeweiligen Rotorblatts gesetzt werden, um Werte der Blattleistungsverläufe jeweils für gleiche Rotorpositionen zu vergleichen, insbesondere so, dass
- alle Blattleistungsverläufe auf eine gleiche Blattposition referenzieren, sodass die Werte der Blattleistungsverläufe immer zu jeweils gleichen Blattpositionen verglichen werden.

10. Verfahren nach einem der vorstehenden Ansprüche, **dadurch gekennzeichnet, dass**
- in Abhängigkeit von der ermittelten individuellen Blattleistung Blattwinkel des jeweiligen Rotorblatts untersucht, insbesondere vermessen werden, wobei
- im Betrieb ein Rotorblatt in seinem Blattwinkel verändert wird, insbesondere kontinuierlich oder in mehreren Schritten,
- bis sich die individuelle Blattleistung dieses Rotorblattes verringert,
- insbesondere bis sich die individuelle Blattleistung dieses Rotorblattes relativ verringert, bezogen auf eine durch die übrigen Rotorblätter ermittelte Referenzblattleistung und insbesondere, dass
- das in seinem Blattwinkel veränderte Rotorblatt bis zu einem Stallbetrieb dieses Rotorblatts verändert wird, und der Blattwinkel, bei dem der Stallbetrieb einsetzt, als Stallblattwinkel erfasst wird und das Rotorblatt kennzeichnet und/oder, dass
- die Untersuchung des Blattwinkels, insbesondere das Erfassen des Stallblattwinkels bei gleichzeitiger Erfassung einer Schnelllaufzahl erfolgt und der so erfassten Schnelllaufzahl zugeordnet wird und diese Zuordnung zur Kennzeichnung des Rotorblattes abgespeichert wird, insbesondere in einem Lookup-Table.

11. Verfahren nach einem der vorstehenden Ansprüche, **dadurch gekennzeichnet, dass**
- zur Verbesserung, insbesondere Optimierung, des Betriebs der Windenergieanlage für wenigstens ein Rotorblatt sukzessive jeweils der Blattwinkel verändert wird und
- Änderungen der individuellen Blattleistung jeweils des im Blattwinkel veränderten Rotorblattes erfasst werden, wobei insbesondere
- individuelle Blattleistungen eines oder mehrerer unveränderter Rotorblätter als Referenzblattleistung verwendet werden und insbesondere, dass
- in Abhängigkeit von der erfassten Änderung der individuellen Blattleistung des im Blattwinkel veränderten Rotorblattes ein optimaler Blattwinkel identifiziert wird, und
- der optimale Blattwinkel jeweils einer Betriebssituation, insbesondere einer erfassten Schnelllaufzahl, zugeordnet und mit der zugeordneten Betriebssituation in einer Datenbank abgespeichert wird und/oder, dass
- ein bzw. der optimale Blattwinkel für jedes Rotorblatt in Abhängigkeit von einer Drehposition des Rotorblattes erfasst und abgespeichert wird, und/oder
- in Abhängigkeit von mehreren erfassten optimalen Blattwinkeln ein von der Blattposition abhängiger Verlauf, insbesondere sinusförmiger Verlauf abgeleitet wird.

12. Verfahren nach einem der vorstehenden Ansprüche, **dadurch gekennzeichnet, dass**
- die individuellen Blattleistungen über wenigstens einen Rotorumlauf für alle Rotorblätter der Windenergieanlage als Blattleistungsverläufe bestimmt werden, und
- die Blattleistungsverläufe verglichen werden und
- aus dem Vergleich Blattabweichungen als Abweichungen gegenüber einem normalen Rotorblatt abgeleitet werden und optional behoben werden, und/oder
- aus dem Vergleich unterschiedliche Blattwinkel, insbesondere Blattfehlstellungen abgeleitet und optional korrigiert werden, und/oder
- das individuelle Blattleistungsvermögen aus einem Lastsignal eines Schlaglastsensors abgeleitet wird, insbesondere ohne Verwendung eines Lastsignals eines Schwenklastsensors.

13. Verfahren nach einem der vorstehenden Ansprüche, **dadurch gekennzeichnet, dass**
- beim Vergleich von geänderten Rotorblättern Randbedingungen, insbesondere Umweltbedingungen aufgenommen und berücksichtigt werden, insbesondere
- Windgeschwindigkeit, Luftdichte und/oder Luftfeuchte, und insbesondere
- Vergleiche zu gleichen oder zumindest ähnlichen Randbedingungen gezogen werden und/oder geänderte Randbedingungen über eine Umrechnungsvorschrift berücksichtigt insbesondere herausgerechnet werden und/oder, dass
- zum Erfassen von Randbedingungen, insbesondere Umweltbedingungen, eine separate Messeinrichtung, insbesondere ein Windmessmast verwendet wird.

14. Windenergieanlage, wobei die Windenergieanlage einen aerodynamischen Rotor mit mehreren, eine Rotorfläche überstreichenden Rotorblättern aufweist, und
- jedes Rotorblatt eine Blattwurzel mit einem Blattwurzelbereich aufweist und in seinem Blattwinkel verstellbar ist; und
- die Windenergieanlage dazu vorbereitet ist, ein Verfahren zum Validieren der Windenergieanlage oder einer Komponente der Windenergieanlage auszuführen, mit dem
- für wenigstens eines der Rotorblätter jeweils aus erfassten Betriebsdaten der Windenergieanlage ein individuelles Blattleistungsvermögen, und/oder eine individuelle Blattleistung ermittelt wird, wobei
- das individuelle Blattleistungsvermögen ein Vermögen eines Rotorblattes beschreibt, Leistung aus Wind in eine Teildrehleistung zum Drehen des Rotors umzuwandeln, und die individuelle Blattleistung eine Leistung der Höhe nach bezeichnet, die das jeweilige Rotorblatt aus dem Wind in eine Teildrehleistung zum Drehen des Rotors umwandelt, sodass eine Summe der individuellen Blattleistungen aller Rotorblätter des Rotors eine gesamte Drehleistung des Rotors ergibt.

15. Windenergieanlage nach Anspruch 14, **dadurch gekennzeichnet, dass**
- die Windenergieanlage eine Steuereinrichtung (226) aufweist, mit der die Windenergieanlage gesteuert werden kann und Messsignale aufgenommen und verarbeitet werden können und/oder dass
- die Windenergieanlage, insbesondere die Steuereinrichtung, dazu vorbereitet ist, ein Verfahren nach einem der Ansprüche 1 bis 13 auszuführen bzw. Verfahrensschritte eines solchen Verfahrens zu initiieren und/oder, dass
- die Windenergieanlage, insbesondere ihre Steuereinrichtung, dazu vorbereitet ist, individuelle Rotorblätter am Rotor zu identifizieren und einer Montageposition am Rotor zuzuordnen, und optional
- ermittelte individuelle Blattleistungsvermögen, insbesondere ermittelte individuelle Blattleistungen dem identifizierten Rotorblatt zuzuordnen.
